# EUROPEAN PATENT SPECIFICATION

(11) **EP 2 884 099 B1**
(45) Date of publication and mention of the grant of the patent: **07.12.2016**
(21) Application number: 12882744.1
(22) Date of filing: 10.08.2012
(51) Int. Cl.: F03D 17/00, F03D 80/30

(54) **STATE OBSERVATION SYSTEM AND STATE OBSERVATION METHOD FOR WIND POWER GENERATION DEVICE**
ZUSTANDSBEOBACHTUNGSSYSTEM UND ZUSTANDSBEOBACHTUNGSVERFAHREN FÜR EINE WINDENERGIEERZEUGUNGSVORRICHTUNG
SYSTÈME D'OBSERVATION D'ÉTAT ET PROCÉDÉ D'OBSERVATION D'ÉTAT POUR DISPOSITIF DE GÉNÉRATION D'ÉNERGIE ÉOLIENNE

(43) Date of publication of application: 17.06.2015
(73) Proprietor: Mitsubishi Heavy Industries, Ltd., Tokyo 108-8215 (JP); MHI Vestas Offshore Wind A/S, 8200 Aarhus N (DK)
(72) Inventor: FUJIOKA, Hideyasu, Tokyo 108-8215 (JP); ICHINOSE, Hidekazu, Tokyo 108-8215 (JP)
(74) Representative: Intès, Didier Gérard André
(86) International application number: PCT/JP2012/070491
(87) International publication number: WO 2014/024303

(56) References cited:
- EP-A1- 1 855 173
- JP-A- 2005 062 080
- JP-A- 2008 025 993
- JP-A- 2008 280 940
- JP-A- 2009 203 893
- JP-A- 2010 043 936
- US-A1- 2006 126 252
- US-A1- 2011 265 575

## Description

### [Technical Field]

The present invention relates to a system and a method for monitoring a wind turbine generator.

### BACKGROUND ART

In recent years, the use of wind turbine generators which generate electric power using wind in a form of renewable energy is progressing from a viewpoint of preservation of global environment. Especially as for large-sized wind turbine generators which are advantageous in respect of power generation efficiency, have made rapid development, and large-sized wind turbine generators with a rotor diameter exceeding 100 meters are also being put in practical use.

With a large-sized wind turbine generator with large rotor diameter, a tip of the blade passes through the position (height) that is far off from the ground at the rotation of the blade. Thus, wind turbine blades tend to receive a lightning strike. For this reason, the monitoring of the lightning strike is performed for the wind turbine blades.

For example, a lightning strike current monitoring device described in Patent Reference 1 has a measurement equipment and a Rogowski coil. The Rogowski coil is arranged at a root of a tower of a wind power generation equipment. The measurement equipment receives an induction current from the Rogowski coil, and generates lightning strike data called a peak value, a waveform, or a charge amount. The measurement equipment has a trigger function, and when the current exceeding a predetermined value is inputted, the measurement equipment starts waveform measurement.

When the measurement equipment acquires lightning strike data, it is added with an equipment specification data of the wind turbine generator as a lightning strike data, and then the lightning strike data is transmitted to a remote monitoring computer. Thus, it is possible to detect which wind turbine generator had a lightning strike, and the value of the lighting strike can be detected with high precision by the remote monitoring computer.

Moreover, Patent Reference 1 proposes to install a Rogowski coil to a grounding line of each blade as a sensor, so as to monitor a lightning strike for each blade.

In this case, the detection device fetches the induction current produced at the sensor by a lightning strike, and then produces detection data indicating there was a lightning strike, or a detection data indicating a lightning strike current passing through the blade that was hit by the lighting. The detection data indicating that there was a lightning strike is produced when the value of the induction current is larger than the threshold that is set up beforehand. The detection data in which the value of the lighting current is shown is calculated based on the induction current by using a calculation formula registered beforehand.

Meanwhile, a monitoring system of a wind turbine generator disclosed in Patent Reference 2 has a video camera and SCADA (Supervisory Control And Data Acquisition) element for grasping the operation state of the wind turbine generator. The operation state may be related with damage on the blade caused by the lightning strike.

The video data and the numerical data acquired with the video camera and the SCADA element are stored in a remote video server and a remote SCADA server, respectively. These remote servers may store the video data and numerical data temporarily and delete the data dated before a specific date.

The Numerical data may be stored in a data point of the database of a remote-control center, and the data point may include attributes of the video data. When abnormalities are discovered by analysis of the numerical data in the remote-control center, and the data point includes the attribute of the video data, the portion of the video data related with the abnormality is read from the remote video server, and a user is provided with it.

Moreover, a monitoring system of a wind turbine generator disclosed in Patent Reference 3 has a sound pickup. When the deviation of a reference noise spectrum and the operation noise spectrum measured by the sound pickup exceeds a threshold, an error message is sent to a remote monitor station. As the reference noise spectrum, a reference noise spectrum stored before may be used.
US2006/126252 discloses a method of registering lightning strikes in the blade of a wind turbine including capturing the lightning strike in a receptor arranged in the blade, and the lightning current is conducted completely or partially through at least one electric resistor, thereby heating it, and that it is registered at least that the temperature of the resistor is or was at some point increased.
EP 1 855 173 discloses a procedure for mass capture of sample data on the operational variables of a wind turbine connected to an electricity network, comprising a first stage in which the operational variables subject to capture and the capture frequencies are selected, and the trigger conditions for commencing the capture operations and the time period covered are determined, and a second stage in which the sample data of the operational variables selected are continuously recorded on the non-volatile memory of the wind turbine control module until the trigger conditions are met, in which case the sample data continues to be recorded until the end of said time period, with the data relating to said time period being registered on said non-volatile memory for subsequent transfer to an external computer.

### [Citation List]

### [Patent Reference]

[Patent Reference 1] JP 2008-153010 A
[Patent Reference 2] US 2010/0135788 A
[Patent Reference 3] JP 2004-525295 A

### SUMMARY

### [Technical Problem]

In the lightning current monitoring system disclosed by Patent Reference 1, when the current exceeding the prescribed value is input to the measurement equipment, the measurement equipment begins the waveform measurement. With this configuration, a waveform just before receiving a lightning strike is not measured and thus, it is difficult to obtain the accurate current value of the lightning strike, and it is difficult to correctly estimate a degree of damage to the blade caused by the lightning.

Moreover, even if the monitoring system for the wind turbine generator of Patent Reference 3 is applied to the monitoring of a lightning strike, it is difficult, simply by using the reference noise spectrum stored beforehand, to correctly evaluate the amount of change in the operation noise spectrum caused by the lightning strike, and it is difficult to correctly estimate the damage state of the blade caused by the lightning strike.

In the monitoring system disclosed by Patent Reference 2, the remote video server deletes the part of the stored data before a specific date but has to store all the video data after the specific date. For this reason, the capacity of the memory unit of the remote video server need to be large, and the monitoring system will become expensive.

Therefore, it is an object of at least one embodiment of the present invention to provide a system and a method for monitoring a state of a wind turbine generator whereby a damage state of a blade of the wind turbine generator caused by a lightning strike is accurately estimated with a simple structure.

### [Means for Solving the Problem]

A system according to claim 1 is provided.

In this system for monitoring a state of the wind turbine generator, the first buffer stores the lightning strike parameter by repeating overwrite the data every first record period and does not store all the lightning strike parameters obtained by the lightning strike parameter acquisition part. Thus, the capacity of the first buffer may be small, and cost reduction of the system for monitoring a state of the wind turbine generator is attained.

Further, in this system for monitoring a state of the wind turbine generator, when the lightning strike parameter exceeds the threshold and the first trigger signal is outputted, the memory part acquires from the first buffer at least a part of the data regarding the lightning strike parameter of a period including before and after the output time of the first trigger signal and stores the at least part of the data, and the reference value estimation part estimates a reference value based on a first data corresponding to a first period, which is before the output time of the first trigger signal, among the data stored in the memory part, and the damage state estimation part estimates a damage state of the blade based on a second data corresponding to a second period, which is after the output time of the first trigger signal, by considering the reference value, so as to accurately estimate the damage state of the blade.

In the invention, the damage state estimation part is configured to estimate the damage state based on a difference between the lightning strike parameter of the second data and the reference value.

With this configuration, by using the difference to estimate the damage state, it is possible to accurately estimate the damage state of the blade.

In one embodiment, the at least one lightning strike parameter includes a current flowing in the blade, and
the damage state estimation part is configured to obtain a lightning current generated at the blade by the lightning strike from the difference and compute a time integrated value of the lightning current so as to estimate the damage state based on the time integrated value.

With this configuration, the damage state of the blade can be estimated by estimating the damage state based on the integrated value of the lightning current. Meanwhile, the lightning current is obtained from the difference between the lightning strike parameter of the second data and the reference value to calculate the integrated value of the lightning current. Thus, the integrated value is calculated accurately, and the damage state can be estimated easily and accurately.

In one embodiment, a database is also provided, which is configured to store correlation information showing a correlation between the time integrated value of the current flowing in the blade and the damage state of the blade,
the damage state estimation part is configured to apply the time integrated value of the lightning current obtained from the difference to the correlation information stored in the database so as to estimate the damage state, and
whether operation of the wind turbine generator is possible is determined based on the estimated damage state.

With this configuration, the integrated value of the lightning current accurately calculated based on the difference is applied to the correlation information so as to estimate the damage state of the blade. Thus, it is possible to estimate the damage state of the blade accurately and easily.

In one embodiment, the at least one blade includes a plurality of blades mounted to a hub of the wind turbine generator,
the at least one lightning strike parameter is acquired by the lightning strike parameter acquisition part as to each of the plurality of blades,
the first buffer is configured to temporarily accumulate the data of the first record period as to each of the plurality of blades,
the first trigger single output part is configured to output the first trigger signal for a blade among the plurality of blades, whose lightning strike parameter exceeds the threshold,
the memory part is configured to acquire from the first buffer and store the data of the period regarding said blade for which the first trigger signal is outputted,
the reference value estimation part is configured to estimate the reference value based on the first data regarding said blade for which the first trigger signal is outputted, and
the damage state estimation part is configured to estimate the damage state of said blade for which the first trigger signal is outputted based on the first data regarding said blade for which the first trigger signal is outputted by considering the reference value.

With this configuration, the lightning strike parameter is acquired as to each of the blades, and the first trigger signal is outputted for the blade whose lightning strike parameter exceeds the threshold. Thus, even in the case where there is more than one blade, it is possible to identify the blade which is struck by lightning and also to know the damage state of the blade.

In one embodiment, each of the blades includes a metal layer extending in a longitudinal direction of the blade from a blade tip part to a blade root part of the blade so as to lead a lightning current generated by the lightning strike from the blade tip part to the blade root part,
the metal layer is electrically connected to an electric discharge ring provided in the blade root part, and the discharge ring being electrically connected to a nacelle of the wind turbine generator via an electric conduction part fixed to the hub so as to form a current path for the lightning current from the metal layer to the nacelle, and
the lightning strike parameter acquisition part includes a current sensor for detecting the current in a section of the current path between the electric discharge ring and the nacelle for each of the blades.

It may be difficult in some cases to directly measure the lightning current passing through the metal layer, depending on a blade design. However, with this configuration, it is possible to detect the lightning current passing through each of the blade by detecting the current in the section of the current path between the electric discharge ring and the nacelle.

In one embodiment, the at least one blade includes a plurality of blades mounted to a hub of the wind turbine generator, and
the system further comprises a communication part which is configured to send monitoring information to an external terminal, the monitoring information includes at least one selected from a group of occurrence time of the lightning strike, identification information of a struck blade of the blades which is struck by lightning, an azimuth angle of the struck blade at the occurrence time, the lightning strike parameter regarding the struck blade, the damage state of the struck blade, and information on whether or not operation of the wind turbine generator is possible.

With this configuration, it is possible to accurately know the state of the wind turbine generator based on the monitoring information received by the external terminal. Thus, it is possible to operate the wind turbine generator appropriately.

In one embodiment, the at least one lightning strike parameter includes at least one of a lightning current in the blade, an internal pressure of the blade, distortion of the blade, a temperature of the blade, vibration of the blade or a rotor including the blade, a shock pulse measurement signal of the blade or the rotor, and an acoustic signal around the wind turbine generator.

In another embodiment, the system further comprises:
a pressure sensor attached to the blade so as to measure an internal pressure of the blade as the lightning strike parameter;
a pressure sensor configured to measure an external pressure of the blade; and
a signal process part configured to calculate change of a pressure difference between the internal pressure and the external pressure of the blade

With this configuration, it is possible to detect generation of pinholes in the blade as the state that the pressure difference between the internal pressure and the external pressure of the blade differs depending on whether there are pinholes or not.

In one embodiment, the lightning strike parameter acquisition part includes a distortion sensor attached to the blade, the distortion sensor being configured to measure distortion of the blade as the lightning strike parameter.

With this configuration, the lightning strike parameter acquisition part includes a distortion sensor and thus, it is possible to measure distortion of the blade as the lightning strike parameter.

In one embodiment, the lightning strike parameter acquisition part includes: an optical fiber embedded in the blade; a light source configured to emit light to the optical fiber; an optical detection part configured to detect reflected light or transmitted light of the light emitted to the optical fiber; and a distortion calculation part configured to calculate the distortion based on the reflected light or transmitted light.

With this configuration, the lightning strike parameter acquisition part includes the optical fiber, the optical detection part and the distortion calculation part and thus, the distortion of the blade can be measured as the lightning strike parameter with high precision.

In one embodiment, the at least one blade includes a plurality of blades mounted to a hub of the wind turbine generator,
the system further comprises: an imaging device configured to image the plurality of blades; a second buffer configured to receive imaging data of the plurality of blades and repeat overwrite of the imaging data within a second record period so as to temporarily accumulate the imaging data in the second buffer; and a communication part configured to send monitoring information to an external terminal,
the memory part is configured to acquire at least a part of the imaging data of a period from the second buffer based on the first trigger signal and store said at least part of the imaging data in the memory part, said period being at least a part of the second record period and including before and after an output time of the first trigger signal, and
the communication part is configured to send at least one selected from a group of the imaging data stored in the memory part, occurrence time of the lightning strike, an azimuth angle of each of the blades at the occurrence time, the lightning strike parameter, the damage state of the blade estimated based on the lightning strike parameter, and information on whether or not operation of the wind turbine generator is possible as the monitoring information to the external terminal.

With this configuration, the second buffer repeats overwrite of the imaging data every second record period so as to temporarily accumulate the imaging data in the second buffer, and the second buffer does not store all of the imaging data obtained by the imaging device. Thus, the capacity of the second buffer may be small, and cost reduction of the system for monitoring a state of the wind turbine generator is attained.

Further, with this configuration, the imaging data is sent to the external terminal. For instance, by analyzing the imaging data, it is possible to identify the blade which is struck by lightning.

In one embodiment, the wind turbine generator comprises a tower, a hub to which the blade is mounted, and a nacelle placed on the tower to rotatably support the hub,
each of the blades includes a metal layer extending in a longitudinal direction of the blade from a blade tip part to a blade root part of the blade so as to lead a lightning current generated by the lightning strike from the blade tip part to the blade root part,
the metal layer is electrically connected to a current path extending from the hub to a root of the tower via the nacelle, and
the lightning strike parameter acquisition part includes a current sensor mounted to the tower, the current sensor being configured to detect a current flowing in the current path.

With this configuration, the lightning current can be detected by the current sensor mounted to the tower, by a simple structure.

Meanwhile, with this configuration, it is possible to identify the struck blade by analyzing the imaging data.

In one embodiment, the system further comprises an imaging device configured to image the at least one blade, and a coverage ratio calculation part configured to calculate a coverage ratio of coating on the blade from the image of the at least one blade obtained by the imaging device.

With this configuration, it is possible to monitor the coverage ratio of the coating on the blade. For instance, it is possible to know whether there is decline of aerodynamic performance or decline of strength caused by coat peeling.

In one embodiment, the system further comprises:
a second buffer configured to receive the imaging data of the blade and repeat overwrite of the imaging data within a second record period so as to temporarily accumulate the imaging data in the second buffer;
a second trigger signal output part configured to output a second trigger signal when the coverage ratio calculated by the coverage ratio calculation part is below a threshold; and
a communication part configured to send monitoring information to an external terminal, and
the memory part is configured to acquire at least a part of the imaging data of a period from the second buffer based on the second trigger signal and store said at least part of the imaging data in the memory part, said period being at least a part of the second record period and including before and after an output time of the second trigger signal, and
the communication part is configured to send at least one selected from a group of the imaging data stored in the memory part, occurrence time of the lightning strike, an azimuth angle of each of the blades at the occurrence time, the lightning strike parameter, the damage state of the blade estimated based on the lightning strike parameter, and information on whether or not operation of the wind turbine generator is possible as the monitoring information to the external terminal.

With this configuration, it is possible to accurately know the state of the wind turbine generator based on the monitoring information received by the external terminal. Thus, it is possible to operate the wind turbine generator appropriately.

In one embodiment, the imaging device is mounted to a tower of the wind turbine generator between a lower end of the tower and a position which is 15 meters above the lower end of the tower.

With this configuration, the imaging device is mounted to the tower at a position of 15 meters or less from the lower end of the tower so as to secure enough distance between the imaging device and the blade. This makes it possible to image most or the entire blade using one imaging device. By mounting the imaging device at the position of 15 meters or less from the lower end of the tower, the imaging device can be installed easily.

In another embodiment, the imaging device is placed within 5 meters from the tower of the wind turbine generator.

With this configuration, the imaging device is placed within 5 meters from an outer peripheral surface of the tower to restrict an installation area for the imaging device. For instance, even in the case of an offshore wind turbine generator, it is possible to secure an installation position for the imaging device.

In one embodiment, the system further comprises at least one device provided for the imaging device and selected from a group of a washer, a wiper and a heater.

With this configuration, the wiper removes dirt, drops of water, etc. on the imaging device and the heater prevents snow, frost or the like from adhering to the device and thus, the imaging device can always acquire clear image of the blade as the imaging data. Therefore, it is possible to accurately estimate the damage state of the blade based on the imaging data, without being affected by the weather or installation conditions.

In one embodiment, the system further comprises an infrared irradiation device configured to irradiate an infrared ray to the blade, and
the imaging device has sensitivity to the infrared ray.

With this configuration, the infrared irradiation device irradiates an infrared ray to the blade, and the imaging device, which has sensitivity to the infrared ray, can capture the image of the blade even at night.

A method according to claim 19 is also provided.

In this method for monitoring a state of the wind turbine generator, the first buffer stores the lightning strike parameter by repeating overwrite the data every first record period and does not store all the lightning strike parameters. Thus, the capacity of the first buffer may be small, and it is possible to monitor a state of the wind turbine generator at low cost.

Further, in this method for monitoring a state of the wind turbine generator, when the lightning strike parameter exceeds the threshold and the first trigger signal is outputted, the memory part acquires from the first buffer at least a part of the data regarding the lightning strike parameter of a period including before and after the output time of the first trigger signal and stores the at least part of the data, and the reference value estimation part estimates a reference value based on a first data corresponding to a first period, which is before the output time of the first trigger signal, among the data stored in the memory part, and the damage state estimation part estimates a damage state of the blade based on a second data corresponding to a second period, which is after the output time of the first trigger signal, by considering the reference value, so as to accurately estimate the damage state of the blade.

### [Effect of the Invention]

According to at least one embodiment of the present invention, it is possible to provide a system and a method for monitoring a state of a wind turbine generator whereby a damage state of a blade of the wind turbine generator caused by a lightning strike is accurately estimated with a simple structure.

### DETAILED DESCRIPTION

[FIG. 1A] FIG.1A is a side view showing a schematic configuration of a wind turbine generator which is an application target of a state monitoring system for a wind turbine generator according to one embodiment of the present invention.
[FIG. 1B] FIG.1B is a view showing a schematic structure around a rotor of the wind turbine generator of FIG.1A.
[FIG. 2] FIG.2 is a schematic block diagram for explaining a structure of the state monitoring system for the wind turbine generator according to one embodiment.
[FIG. 3] FIG.3 is a schematic block diagram for explaining a functional structure of the state monitoring system for the wind turbine generator according to one embodiment.
[FIG. 4] An upper part is a chart for explaining data stored in a first buffer of FIG.3, and a lower part is a chart for explaining data stored in a memory part of FIG.3.
[FIG. 5] FIG.5 is a flow chart for explaining a procedure of the state monitoring method which the state monitoring system for the wind turbine generator performs.
[FIG. 6] FIG.6 is a side view showing a schematic structure of the wind turbine generator which is an application target of the state monitoring system for the wind turbine generator according to one embodiment.
[FIG. 7] FIG.7 is a schematic block diagram for explaining a functional structure of the state monitoring system for the wind turbine generator according to one embodiment.
[FIG. 8] An upper part of FIG.8 is a chart for explaining imaging data stored in a second buffer of FIG.7, and a lower part of FIG.8 is a chart for explaining imaging data stored in a memory part of FIG.7.
[FIG. 9] FIG.9 is a schematic block diagram for explaining a functional structure of the state monitoring system for the wind turbine generator according to one embodiment.
[FIG. 10] FIG.10 is a schematic block diagram for explaining accessory equipments for the imaging device according to one embodiment.
[FIG. 11] FIG.11 is a schematic block diagram for explaining a structure of a lightning strike parameter acquisition part in the state monitoring system for the wind turbine generator according to one embodiment.
[FIG. 12] FIG.12 is a schematic block diagram for explaining a structure of a lightning strike parameter acquisition part in the state monitoring system for the wind turbine generator according to one embodiment.
[FIG. 13] FIG.13 is a schematic block diagram for explaining a structure of a lightning strike parameter acquisition part in the state monitoring system for the wind turbine generator according to one embodiment.
[FIG. 14] FIG.14 is a schematic block diagram for explaining a structure of a lightning strike parameter acquisition part in the state monitoring system for the wind turbine generator according to one embodiment.
[FIG. 15] FIG.15 is a schematic block diagram for explaining a structure of a lightning strike parameter acquisition part in the state monitoring system for the wind turbine generator according to one embodiment.
[FIG. 16] FIG.16 is a schematic block diagram for explaining a structure of a lightning strike parameter acquisition part in the state monitoring system for the wind turbine generator according to one embodiment.
[FIG. 17] FIG.17 is a schematic block diagram for explaining a structure of a lightning strike parameter acquisition part in the state monitoring system for the wind turbine generator according to one embodiment.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

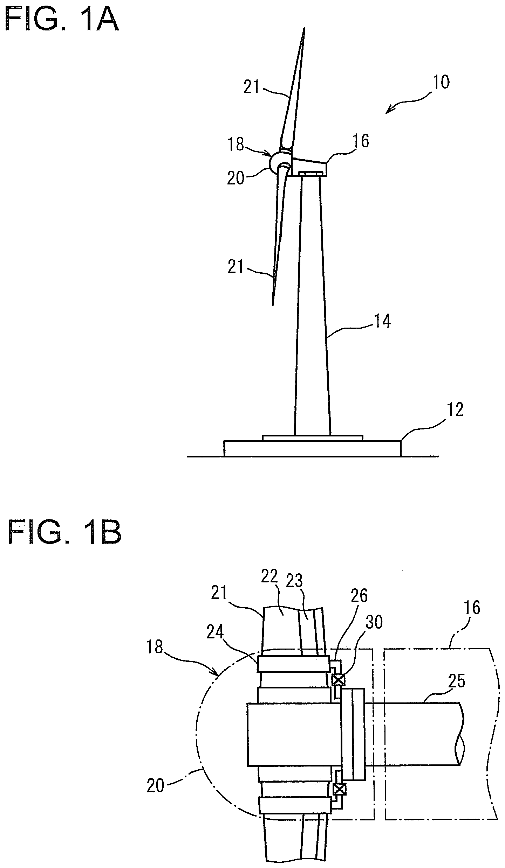

FIG.1A is a side view showing a schematic configuration of a wind turbine generator 10 to which a state monitoring system for a wind turbine generator according to one embodiment of the present invention is applied.

The wind turbine generator 10 comprises a tower 14 installed on a base 12, a nacelle 16 placed atop the tower 14, and a rotor 18. The rotor 18 comprises a rotor head (hub) 20 mounted rotatably to the nacelle 16, and at least one wind turbine blade (blade) 21 mounted on the rotor head 20. In one embodiment, the wind turbine generator 10 has three blades 21.

When the rotor 18 is rotated by wind force, the wind turbine generator 10 generates electric power and then supply the electric power to a grid connected to the wind turbine generator 10. Further, the wind turbine generator 10 may be installed onshore or offshore.

FIG.1B is a view showing a schematic structure around the rotor 18.

In some embodiments, each wind turbine blade 21 of the wind turbine generator 10 has a hollow blade body 22 made of GFRP (fiberglass reinforced plastic), CFRP (carbon fiber reinforced plastic) or the like, and a metal layer 23 of a foil or mesh form, and a surface of the blade body 22 is laminated with the metal layer 23. The metal layer 23 extends between a tip side and a root side of each wind turbine blade 21. The metal layer 23 is electrically connected to a conductive electric discharge ring 24 which is fitted into the blade root side.

The electric discharge ring 24 is electrically connected to a conductive shaft 25 by conductive materials 26 of a spoke shape extending radially from the shaft 25 to be electrically connected to the conductive nacelle 16 via the shaft 25. The nacelle 16 is electrically connected to the conductive tower 14. Thus, the metal layer 23, the electric discharge ring 24, the nacelle 16 and the tower 14 constitutes a current path (a grounding line) 28 which extends from the tip of the wind turbine blade 21 to the lower end of the tower 14, and the metal layer 23 has a function as a down conductor.

In addition, each wind turbine blade 21 may have a lead wire, as a down conductor, extending inside the wind turbine blade 21.

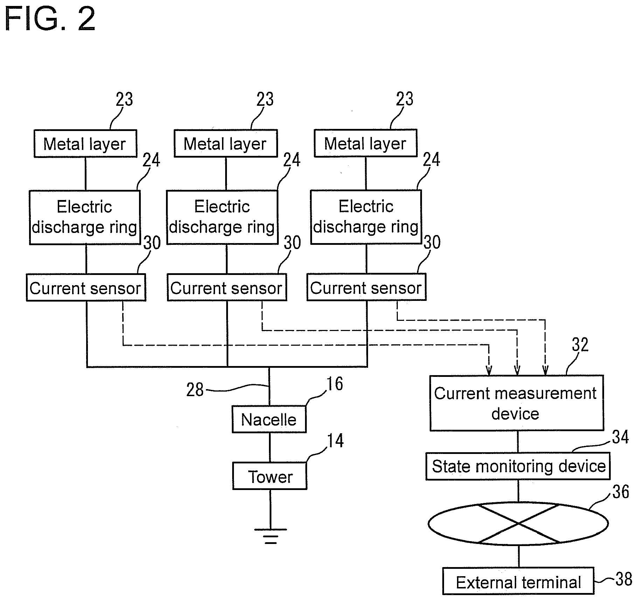

FIG.2 is a schematic block diagram for explaining a structure of the state monitoring system for the wind turbine generator (hereinafter, simply referred to as a state monitoring system) according to one embodiment.

The state monitoring system is capable of detecting occurrence of lightning strike on the wind turbine blade 21 and estimating a damage state of the wind turbine blade 21 caused by the lightning strike. Further, the state monitoring system is also capable of informing an external part of a detection result and an estimation result.

As a sensor for detecting a lightning strike, a current sensor 30 is attached to a part of the current path 28 between the electric discharge ring 24 and the nacelle 16. In one embodiment, three current sensors 30 are attached to three parallel parts of the current paths 28 which exist in corresponding three wind turbine blades 21. More specifically, one current sensor 30 is attached to each of the three conductive members 26. The current sensor 30 is, for example, a Rogowski coil or a current transducer.

The current sensor 30 is electrically connected to a current measurement device 32. The current measurement device 32 is a driver or a signal processing equipment of the current sensor 30, and is capable of obtaining an amount of the electric current flowing in the metal layer 23 (current value) based on an output signal of the current sensor 30. Further, in the above-mentioned state monitoring system, the current measurement device 32 is capable of calculating a current value for each current sensor 30, i.e. each metal layer 23.

The current measurement device 32 is electrically connected to the state monitoring device 34. The state monitoring device 34 is constituted by a computer which consists of a central processing unit, a memory, a storage unit, an input/output device, etc.

Based on the current passing through the metal layer 23 acquired by the current sensor 30 and the current measurement device 32, the state monitoring device 34 estimates the damage state of the wind turbine blade 21, and transmits it towards an external terminal 38 through a communication network 36. The external terminal 38 is, for instance, a terminal installed in a central control room of a wind farm. The terminal communications network 36 is, for instance, internet or data-communication network of a cellular phone.

Further, the current measurement device 32 and the state monitoring device 34 are arranged, for example, inside the nacelle 16.

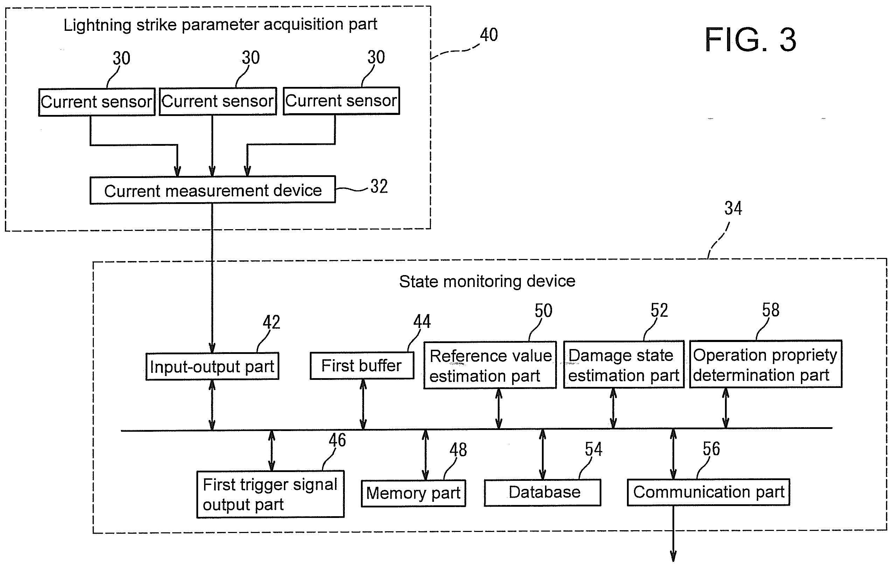

FIG.3 is a schematic block diagram for explaining a functional structure of the state monitoring device 34 as well as the current sensor and the current measurement device 32.

In the above-mentioned state monitoring system, a lightning current is used as a lightning strike parameter which indicates a level of the lightning strike. The lightning strike parameter is used for estimation of the damage state of the wind turbine blade 21. For this reason, the current sensor 30 and the current measurement device 32 for measuring the lightning strike are collectively called a lightning strike parameter acquisition part 40.

The state monitoring device 34 comprises, when seen by functions, an input-and-output part 42, a first buffer 44, a first trigger signal output part 46, a memory part 48, a reference value estimation part 50, a damage state estimation part 52, a database 54, a communication part 56, and an operation propriety determination part 58.

The input-and-output part 42 is a machine-machine interface, and the current value which the current measurement device 32 outputs is inputted into the input-and-output part 42. The current value inputted into the input-and-output part 42 is accumulated (stored) temporarily in the first buffer 44.

The first buffer 44 is a ring buffer and is constituted by a volatile or non-volatile memory. A ring buffer continues storing new data continuously while repeating overwrite every fixed period (hereinafter, referred to as a first record period), i.e. while eliminating past data which has been stored for more than the first record period. In other words, the first buffer 44 constantly stores data from a point in the past to the present point. The point in the past is retroactive from the present point by the first record period.

In the above state monitoring system, the first buffer 44 is constituted by three ring buffers corresponding to the three current sensors 30.

The first trigger signal output part 46 reads the current value stored in first buffer 44, and determines whether or not the current value exceeded a threshold that is set beforehand. The first trigger signal output part 46 generates and outputs the first trigger signal, when the current value exceeds the threshold.

The memory part 48 is constituted, for instance, by a non-volatile memory unit, such as a hard disk. With the first trigger signal outputted by the first trigger signal output part 46 as a trigger, the data of the current value temporarily stored in first buffer 44 is read and stored in the memory part 48.

The data stored in the memory part 48 is a part of the data of the current value stored in the first buffer 44. This part of the data is data over a period including before and after an output time of the first trigger signal. Therefore, the data stored in the memory part 48 is the data (hereinafter referred to as first data) of the current value corresponding to the period before the output of the first trigger signal (hereinafter referred to as a first period), and data (hereinafter referred to as second data) of the current value corresponding to the period after the output of the first trigger signal (hereinafter referred to as a second period).

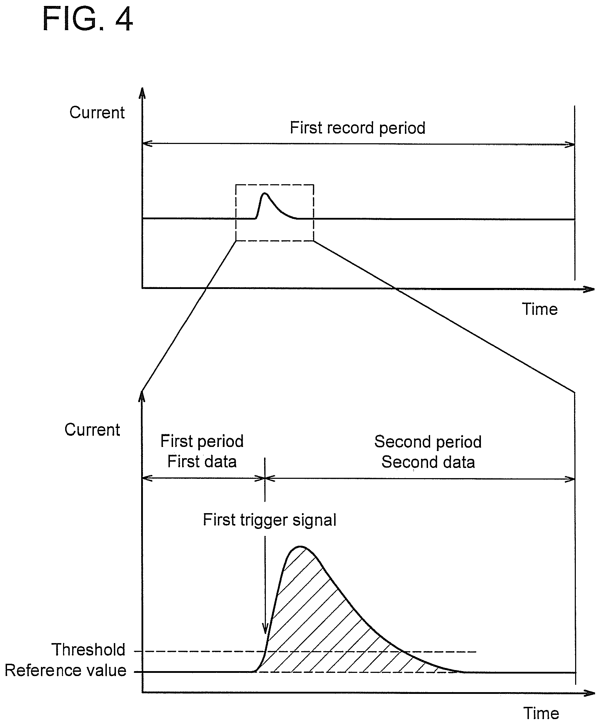

In FIG.4, an upper part shows a chart for explaining the current value data stored in the first buffer 44, i.e. the first data, and a lower part shows a chart for explaining the current value data stored in the memory part 48, i.e. the second data. As shown in FIG.4, at least a part of the data stored in the first buffer 44 is extracted for an appropriate period (a time window) including the output time of the first trigger signal and before and after the output time, and then stored in the memory part 48.

The reference value estimation part 50 estimates the reference value based on the first data stored in the memory part 48. In the above-mentioned state monitoring system, the reference value is an average value of the first data, and is equivalent to a background level of the current value immediately before the first trigger signal is outputted. Further, in order to compute the background level of the current value accurately, a rise portion of the lightning current which exists just before the output time of the first trigger signal may be excluded to calculate the reference value.

The damage state estimation part 52 estimates the damage state of the wind turbine blade 21 in consideration of the reference value estimated by the reference value estimation part 50 based on the second data stored in the memory part 48.

In the above-mentioned state monitoring system, the damage state estimation part 52 compute a time integrated value of a difference obtained by subtracting the reference value from the current value, which is a value of a charge electric charge amount passing through the metal layer 23. Further, the charge amount may include a charge amount immediately before the first trigger signal is outputted. The charge amount in this case is equivalent to an area of a hatching section of the lower part of FIG.4.

The damage state estimation part 52 estimates the damage state of the wind turbine blade 21 based on the calculated charge amount. In the above-mentioned state monitoring system, correlation information which shows a correlation between the charge amount as a lightning strike parameter and the damage state on the wind turbine blade 21 is stored beforehand in the database 54, and is registered into a memory unit of the state monitoring device 34. The damage state estimation part 52 can apply the electric charge amount to the database 54 and can estimate a damage state. Specifically, a damage state can be estimated by searching the database 54 with the computed electric charge amount, and reading the information on the damage state corresponding to the electric charge amount.

The communication part 56 is configured to transmit the damage state of the wind turbine blade 21 estimated by the damage state estimation part 52 to the external terminal 38 as monitoring information. Further, in the above-mentioned state monitoring system, the current value is acquired as a lightning strike parameter for every wind turbine blade 21, and the wind turbine blade 21 which is struck by lightning can be specified among the wind turbine blades 21. For this reason, the identification information on the wind turbine blade 21 struck by lightning is incorporated in the monitoring information with the identification information of the wind turbine generator 10 and transmitted toward the external terminal 38. Moreover, the output time of the first trigger signal can be included in the monitoring information as the time when the blade is struck by lightning, and an azimuth mass angle of the wind turbine blade 21 can also be included in monitoring information as well.

The operation propriety determination part 58 determines whether or not the operation of the wind turbine generator 10 is possible based on the damage state of the wind turbine blade 21 estimated by the damage state estimation part 52. And the communication part 56 can transmit the determination result of the operation propriety determination part 58 as monitoring information. Further, since there is correlation between the damage state of the wind turbine blade 21, and the propriety of operation of wind turbine generator 10, if this correlation is also included in the database 54, the operation propriety determination part 58 applies the damage state to the database 54 to determine whether or not the operation is possible.

The above-described determination of the operation possibility in the state monitoring system may include determination of whether or not the operation of the wind turbine generator 10 under operation may be continued.

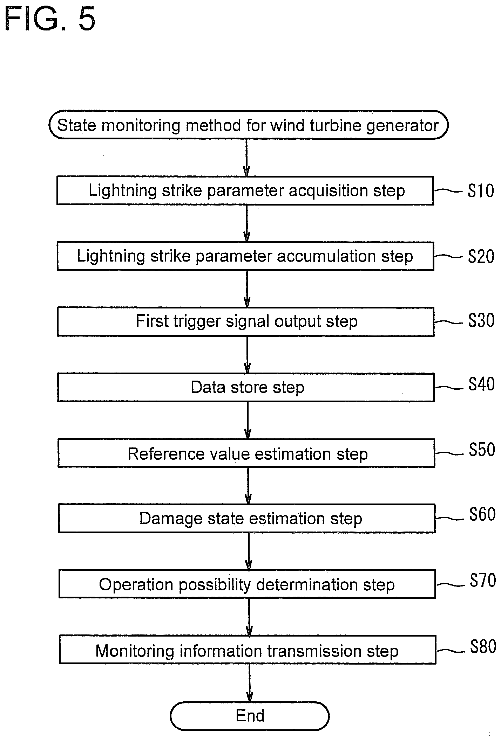

FIG.5 is a flow chart for explaining a procedure of the state monitoring method for the wind turbine generator, which the state monitoring system for the wind turbine generator performs (hereinafter also simply referred to as the state monitoring method).

The state monitoring method shown in FIG.5 has a lightning strike parameter acquisition step S10, a lightning strike parameter accumulation step S20, a first trigger signal output step S30, a data storing step S40, a reference value estimation step S50, a damage state estimation step S60, an operation propriety determination step S70, and a monitoring information transmitting step S80.

In the lightning strike parameter acquisition step S10, the current value which passes through each metal layer 23 is almost continuously measured, as a lightning strike parameter, by the current sensor 30 and the current measurement device 32 as the lightning strike parameter acquisition part 40.

In the lightning strike parameter accumulation step S20, the lightning strike parameter obtained in the lightning strike parameter acquisition step S10 is stored while repeating overwriting for every first record period to first buffer 44. In the above state monitoring system, the first buffer 44 is constituted by three ring buffers provide in correspondence to three current sensors 30, and the current value acquired by each of the three current sensors 30 is stored in the corresponding ring buffer of the first buffer 44.

In the first trigger signal output step S30, the current value data stored in first buffer 44 in the lightning strike parameter accumulation step S20 is read and compared with a threshold. If the current value exceeds the threshold, the first trigger signal is outputted. The first trigger signal is generated and outputted for each of the ring buffers.

In the data storing step S40, with the first trigger signal as a trigger, data of the period including before and after the output time of the first trigger signal is read from the data stored in the first buffer 44, and then is stored in the memory part 48. In the above-mentioned state monitoring system, the data of the ring buffer related to the output of the first trigger signal among the three ring buffers is stored in the memory part 48. In this case, the identification information on the ring buffer corresponding to the current sensor 30 which detected the current value exceeding the threshold, or the identification information on the corresponding wind turbine blade 21 is given to the data to be stored in the memory part 48. Alternatively, corresponding to the ring buffers, a storage area of the memory part 48 may be divided into two or more sections, and the storage area of the memory part 48 may be properly used corresponding to the current sensor 30 which has detected the current value.

In the reference value estimation step S50, the reference value is estimated based on the first data corresponding to the first period before the output of the first trigger signal among the data stored in the memory part. In the above-mentioned state monitoring system, the background level of the current value is estimated as the reference value, and it is the time average of the first data.

In the damage state estimation step S60, the damage state of the wind turbine blade 21 is estimated based on the second data corresponding to the second period after the output of the first trigger signal among the data stored in the memory part 48 by considering the reference value estimated in the reference value estimation step S50. In the above-mentioned state monitoring system, a time integrated value of a difference obtained by subtracting the reference value from the current value serving as the second data is obtained, and the damage state is estimated based on this time integrated value. The time integrated value is equivalent to the electric charge amount through the current sensor 30.

In the above-mentioned state monitoring system, the correlation between the electric charge amount and the damage state of the wind turbine blade 21 is registered into the database 54, and a damage state is estimated by applying the electric charge amount to the database 54.

In the operation propriety determination step S70, it is determined whether or not operation of the wind turbine generator 10 is possible based on the damage state of the wind turbine blade 21 estimated in the damage state estimation step S60. In the above-mentioned state monitoring system, the correlation of the operation propriety of wind turbine generator 10 and the damage state of the wind turbine blade 21 are registered into the database 54, and it is possible to determined whether or not operation of the wind turbine generator 10 is possible, by applying the electric charge amount to the correlation information within the database 54.

In the monitoring information transmission step S80, the monitoring information is transmitted towards the external terminal 38. In the above-mentioned state monitoring system, the monitoring information contains the identification information of the wind turbine generator 10, the damage state of the wind turbine blade 21 estimated in the damage state estimation step S60, the identification information on the wind turbine blade 21, the operation propriety information on the wind turbine generator 10 determined in the operation propriety determination step S70, and the output time of the first trigger signal.

In the state monitoring system of the wind turbine generator of one embodiment, the buffer 44 accumulates the lightning strike parameters by repeating overwrite every first record period, and does not accumulate all of the lightning strike parameters acquired by the lightning strike parameter acquisition part 40. For this reason, the capacity of the first buffer may be small and cost reduction of the state monitoring system of the wind turbine generator is attained.

Further, in this system for monitoring a state of the wind turbine generator, when the lightning strike parameter exceeds the threshold and the first trigger signal is outputted, the memory part 48 acquires from the first buffer 44 a part of the data regarding the lightning strike parameter of a period including before and after the output time of the first trigger signal and stores the part of the data. The reference value estimation part 50 estimates a reference value based on the first data corresponding to the first period, which is before the output time of the first trigger signal, among the data stored in the memory part 48, and the damage state estimation part 52 estimates a damage state of the wind turbine blade 21 based on the second data corresponding to the second period, which is after the output time of the first trigger signal, by considering the reference value, so as to accurately estimate the damage state of the wind turbine blade 21.

According to the above embodiment, the damage state of the wind turbine blade 21 can be accurately estimated presumed by estimating the damage state based on the difference between the lightning strike parameter of the second data and the reference value.

According to the above embodiment, the damage state of the wind turbine blade 21 can be estimated by estimating the damage state based on the integrated value of the lightning current. Meanwhile, the lightning current is obtained from the difference between the lightning strike parameter of the second data and the reference value to calculate the integrated value of the lightning current. Thus, the integrated value is calculated accurately, and the damage state can be estimated correctly.

According to the above embodiment, the integrated value of the lightning current accurately calculated based on the difference between the lighting strike parameter of the second data and the reference value is applied to the correlation information, so as to estimate the damage state of the wind turbine blade 21. Thus, it is possible to estimate the damage state of the wind turbine blade 21 accurately and easily.

According to the above embodiment, the lightning strike parameter is acquired as to each of the wind turbine blades 21, and the first trigger signal is outputted for the wind turbine blade 21 whose lightning strike parameter exceeds the threshold. Thus, even in the case where there is more than one wind turbine blade 21, it is possible to identify the wind turbine blade 21 struck by lightning and also to know the damage state of the wind turbine blade 21.

It may be difficult in some cases to directly measure the lightning current passing through the metal layer, depending on a design of the wind turbine blade 21. However, according to the above embodiment, it is possible to detect the lightning current passing through each of the wind turbine blades 21 by detecting the current in the section of the current path 28 between the electric discharge ring 24 and the nacelle 16.

According to the above embodiment, it is possible to accurately know the state of the wind turbine generator 10 based on the monitoring information that the external terminal 38 receives. This makes it possible to operate the wind turbine generator 10 appropriately.

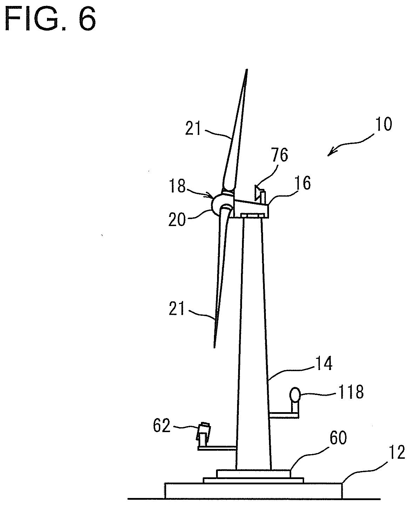

FIG.6 is a side view showing a schematic structure of the wind turbine generator 10 to which the state monitoring system of another embodiment is applied. In the following description, the same reference numerals are given without adding explanations for those configurations that are similar or the same as the above-described embodiment.

The state monitoring system has a current sensor 60 instead of the current sensor 30. The current sensor 60 is constituted by a Rogowski coil arranged to surround a root of the tower 14. The current sensor 60 can measure the lightning current at a root part of the tower 14 in the current path.

Further, in the above embodiment, the current sensor 60 may be provided in addition to the current sensor 30. In this case, all of the lightning current can be measured by the current sensor 60 for confirmation purpose.

Moreover, the state monitoring system of the above-mentioned state monitoring system has at least one imaging device 62 which can image most or all of the wind turbine blades 21. In the above-mentioned state monitoring system, the imaging device 62 is a digital camcorder, and can acquire the imaging data (video data) of the wind turbine blade 21.

The imaging device 62 is supported, for example, by a bracket secured to the tower 14, such as a steel belt. The imaging device 62 is installed, for instance, within 15 meters from a lower end of the tower 14. Further, from an outer peripheral surface of the tower 14 of the wind turbine generator, the imaging device 62 is placed, for instance, within 5 meters.

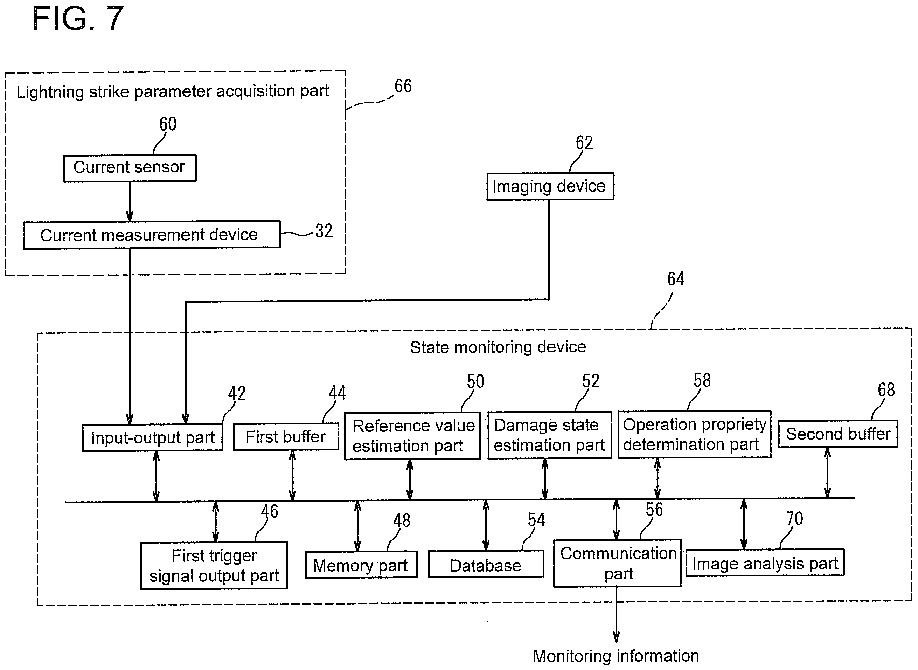

FIG.7 is a schematic block diagram for explaining a functional structure of a state monitoring device 64 as well as the current sensor 60, the current measurement device 32 and the imaging device 62. In the above-described state monitoring system, the current sensor 60 and the current measurement device 32 constitute an lightning strike parameter acquisition part 66.

The state monitoring device 64 further comprises a second buffer 68 which is constituted by a volatile or non-volatile memory. The imaging data acquired by the imaging device 62 is inputted into the input-and-output part 42, and is stored in the second buffer 68. In the above-mentioned state monitoring system, the second buffer 68 is constituted by a ring buffer 68 which repeats overwrite of the stored data every prescribed period (the second record period).

When the first trigger signal is outputted, the memory part 48 acquires a part of the imaging data of a period stored in the second buffer and store the part of the imaging data in the memory part 48. The period includes the output time of the first trigger signal and before and after the output time. Specifically, the memory part 48 has a storage area for storing the imaging data in addition to a storage area for storing the lightning strike parameter.

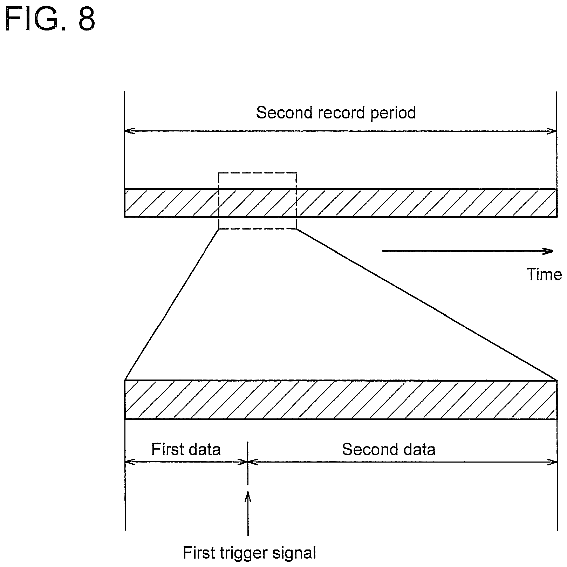

In FIG.8, an upper part of FIG.8 is a chart for explaining the imaging data stored in the second buffer 68, and a lower part of FIG.8 is a chart for explaining the imaging data stored in the memory part 48.

In the above-mentioned state monitoring system, the imaging data stored in the memory part 48 is contained in the monitoring information transmitted by the communication part 56 to the external terminal 38.

In the above-described state monitoring system, the second buffer 68 repeats overwrite of the imaging data every second record period so as to accumulate the imaging data in the second buffer 68, and the second buffer 68 does not store all of the imaging data obtained by the imaging device. Thus, the capacity of the second buffer 68 may be small, and cost reduction of the state monitoring system for the wind turbine generator is attained.

Further, in the above state monitoring system, the imaging data captured before and after the output time of the first trigger signal, as illustrated in the lower part of FIG.8, is sent to the external terminal 38. For instance, by analyzing the imaging data, it is possible to identify the wind turbine blade 21 struck by lightning from a plurality of the wind turbine blades 21.

Furthermore, in the state monitoring system mentioned above, by installing the imaging device 62 within 15 meters from the lower end of the tower 14, it is possible to keep enough distance between the imaging device 62 and the wind turbine blade 21m and the image of most or all of the wind turbine blade 21 can be capture by one imaging device 62. Moreover, by installing the imaging device 62 within 15 meters from the lower end of the tower 14, installation of the imaging device 62 is facilitated.

Further, in the above state monitoring system, by installing the imaging device 62 within 5 meters from the outer peripheral surface of the tower 14, the installation area of the imaging device 62 is restricted. For instance, even if the wind turbine generator 10 is installed offshore, the installation space for the imaging device 62 can be secured.

As one embodiment, the state monitoring device 64 may further comprise an image analysis part 70. The image analysis part 70 can identify the wind turbine blade struck by lightning based on the imaging data stored in the memory part 48, which is the imaging data of the period including before and outer the output time of the first trigger signal. In this case, the identification information on the identified wind turbine blade 21 can be included in the monitoring information.

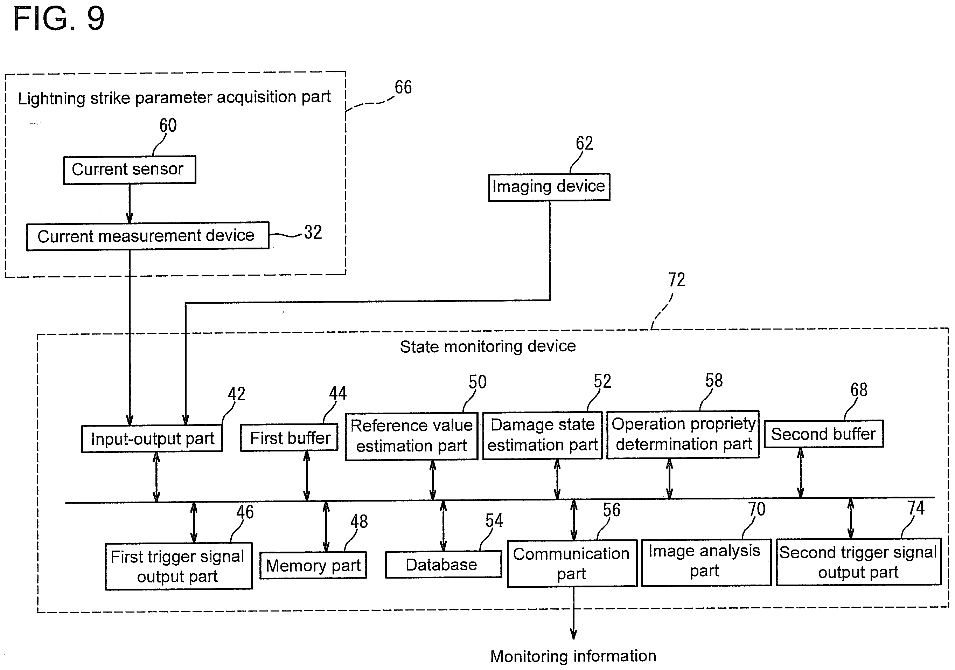

FIG.9 is a schematic block diagram for explaining a functional structure of the state monitoring device 72 according to another embodiment. The image analysis part 70 of the state monitoring system 72 may have a function to calculate a coverage ratio of coating on the wind turbine blade 21. The state monitoring device 72 has a second trigger signal output part 74 for outputting the second trigger signal when the coverage ratio calculated by the image analysis part 70 is less than a prescribed threshold.

When the second trigger signal is outputted, the memory part 48 is configured to store a part of the data of a period including before and after the output time of the second trigger signal, from the imaging data stored in the second buffer 68. Specifically, the memory part 48 has a storage area for storing the imaging data when the second trigger signal is outputted, in addition to a storage area for storing the data when the first trigger signal is outputted.

The communication part 56 transmits the monitoring information as the first trigger signal, apart from the first trigger signal, and the coverage ratio is included in the monitoring information.

With this configuration, it is possible to monitor the coverage ratio of the coating on the wind turbine blade 21. For instance, it is possible to know whether there is decline of aerodynamic performance or decline of strength caused by coat peeling.

In one embodiment, as illustrated in FIG.6, an infrared irradiation device 76 is also provided to irradiate an infrared ray to the wind turbine blade 21, and a camcorder with sensitivity to the infrared ray is used as the imaging device 62.

With this configuration, the infrared irradiation device 76 irradiates an infrared ray to the wind turbine blade 21, and the imaging device 62, which has sensitivity to the infrared ray, can capture the image of the wind turbine blade 21 even at night.

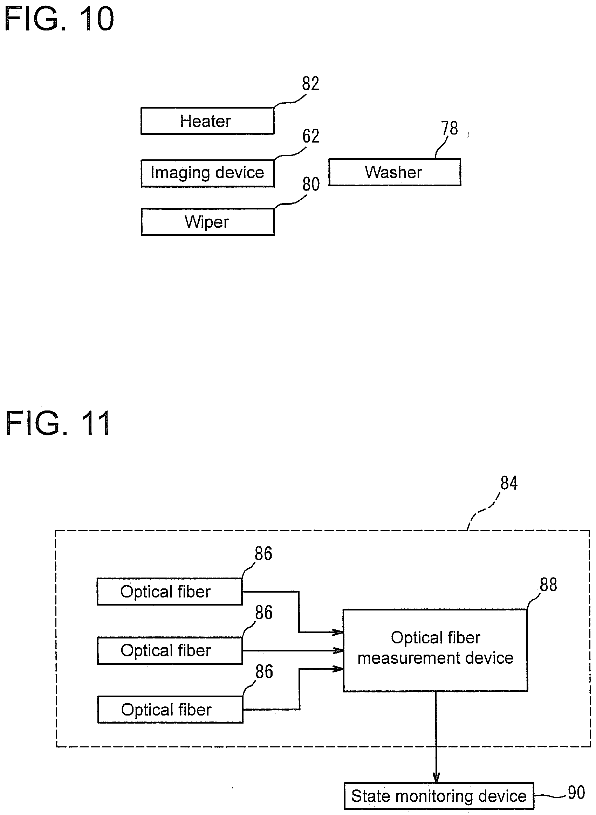

In one embodiment, as illustrated in FIG.10, at least one device selected from a group of a washer 78, a wiper 80 and a heater 82 is provided for the imaging device 62. The washer 78 sprays cleaning liquid to clean the imaging device 62 or a cover which covers the imaging device 62. The wiper 80 wipes out dirt, drops of water, etc. on the imaging device 62 or the cover covering the imaging device 62. The heater 82 prevents snow, frost or the like from adhering to the imaging device 62 or the cover covering the imaging device 62.

With this configuration, the washer 78 or the wiper 80 removes dirt, drops of water, etc. adhering to the imaging device 62 or the covering the imaging device 62, and the heater 82 prevents snow, frost or the like from adhering to the imaging device 62 or the covering the imaging device 62 and thus, the imaging device 62 can always acquire clear image of the wind turbine blade 21 as the imaging data. Therefore, it is possible to accurately estimate the damage state of the wind turbine blade 21 based on the imaging data, without being affected by the weather or installation conditions.

Further, a lighting equipment irradiating visible light may be used instead of the infrared irradiation device 76.

In one embodiment, distortion of the wind turbine blade 21 is used as a lightning strike parameter. FIG.11 is a schematic block diagram for explaining a structure of a lightning strike parameter acquisition part 84 for measuring distortion of the wind turbine blade 21.

The lightning strike parameter acquisition part 84 has a plurality of optical fibers 86. Each of the optical fibers 86 is disposed over almost the entire length of each of the wind turbine blades 21 along the longitudinal direction of the wind turbine blade 21. An optical fiber measurement device 88 as a signal processing unit emits light so that the light enters each of the optical fibers 86, and detects reflected light.

For example, the optical fiber measurement device 88 may be an OTDR type which computes distortion of the optical fiber 86 from reduction of back reflected light of the light emitted to the optical fiber 86, or may be a BOTDR type which computes distortion of the optical fiber 86 from frequency shift of Brillouin reflected light of the light emitted to the optical fiber 86.

The fiber measurement device 88 may be a measurement device of OSMOS type or MDM type for calculating distortion of the optical fiber 86 from light quantity change of the transmitted light of the optical fiber 86.

The state monitoring device 90 processes the value of distortion measured by the optical fiber measurement device 88 as a lightning strike parameter.

With this configuration, occurrence of lightning strike can be detected as the wind turbine blade 21 is distorted by lightning strike, and based on the distortion amount, a damage state of the wind turbine blade 21 caused by the lightning strike can be estimated. Especially, the lightning strike parameter acquisition part 84 includes the optical fibers, the optical detection and a distortion and is capable of measuring distortion of the wind turbine blade 21 as a lightning strike parameter with high precision. Further, the state monitoring device 90 may use the distortion value as the lightning strike parameter instead of the lightning current, or may use both the lightning current and the distortion value as the lightning strike parameter.

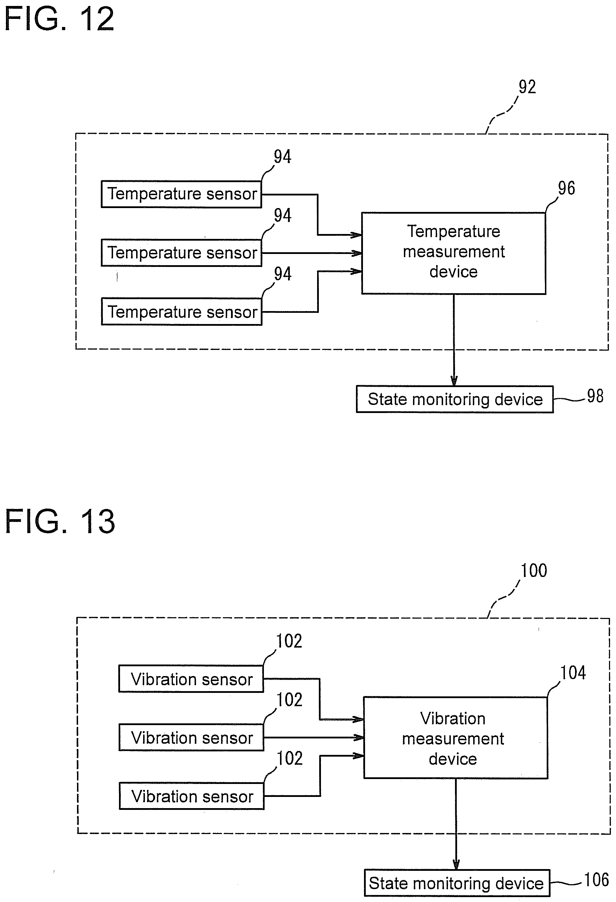

In one embodiment, a temperature of the wind turbine blade 21 is used as the lightning strike parameter. FIG.12 is a schematic block diagram for explaining a structure of the lightning strike parameter acquisition part 92 for measuring a temperature of the wind turbine blade 12.

The lightning strike parameter acquisition part 92 has a plurality of temperature sensors 94 which consist of thermocouples, for instance. The temperature sensor 94 is attached to each wind turbine blade 21, and a temperature measurement device 96 as a signal processing device computes a temperature of each wind turbine blade 21 based on the output signal of the temperature sensor 94.

A state monitoring device 98 processes the value of the temperature of each wind turbine blade 21 measured by the temperature measurement device 96 as a lightning strike parameter. With this configuration, occurrence of lightning strike can be detected by the temperature rise caused by the lightning strike, and a damage state of the wind turbine blade 21 caused by the lightning strike can be detected based on the amount of temperature rise.

Further, the state monitoring device 98 may use the value of the temperature alone as a lightning strike parameter, instead of the lightning current or distortion or may use the value of the temperature with one or both of the lightning current and the distortion, as the lightning strike parameter.

In one embodiment, vibration of the wind turbine blade 21 is used as the lightning strike parameter. FIG.13 is a schematic block diagram for explaining a structure of a lightning strike parameter acquisition part 100 for measuring vibration of the wind turbine blade 21.

The lightning strike parameter acquisition part 100 has a plurality of vibration sensors 102 which is constituted by acceleration sensors or the like, for instance. The vibration sensor 102 is attached to each wind turbine blade 21, and a vibration measurement device 104 as a signal processing device computes vibration of each wind turbine blade 21 based on the output signal of the vibration sensor 102.

The state monitoring device 106 processes the value of vibration of each wind turbine blade 21 measured by the vibration measurement device 104 as a lightning strike parameter. With this configuration, occurrence of lightning strike can be detected from the vibration caused by the lightning strike, and a damage state of the wind turbine blade 21 due to the lightning strike can be detected based on the amount of vibration.

Further, the state monitoring device 106 may use the value of vibration alone as a lightning strike parameter, instead of the lightning current, the distortion and the temperature, or may use the value of vibration with at least one of the lightning current, the distortion and the temperature, as the lightning strike parameter.

In one embodiment, one vibration sensor 102 may be provided at the rotor head 20 to detect vibration of the rotor head 20 as the lightning strike parameter.

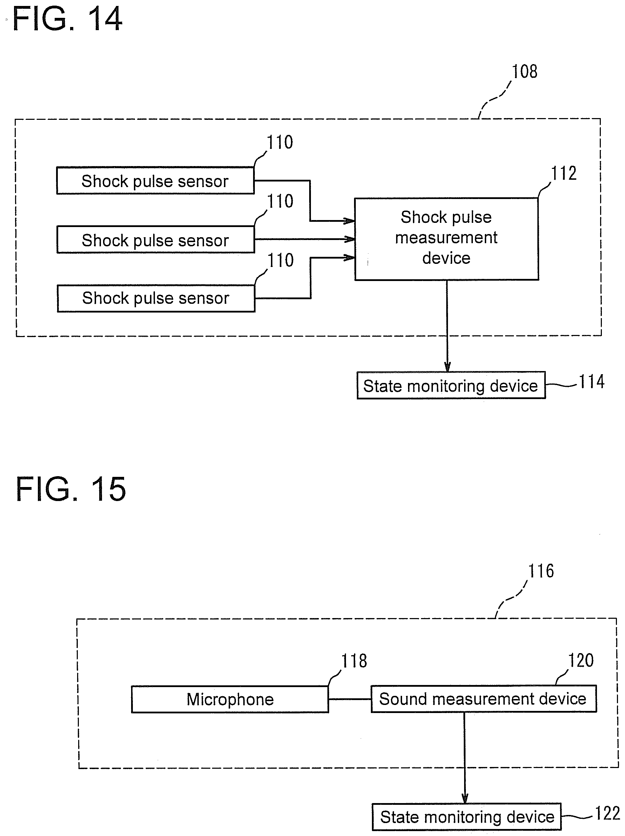

In one embodiment, shock pulse generated at the wind turbine blade 21 is used as the lightning strike parameter. FIG.14 is a schematic block diagram for explaining a structure of a lightning strike parameter acquisition part 108 for measuring shock pulse of the wind turbine blade 21.

The lightning strike parameter acquisition part 108 has a plurality of shock pulse sensors 110 which is constituted by a piezo-electric element. The shock pulse sensor 110 is attached to each wind turbine blade 21, and the shock pulse measurement device 112 as a signal processing device computes the shock pulse at each wind turbine blade 21 based on the output signal of the shock pulse sensor 110.

The state monitoring device 114 processes the value of the shock pulse of each wind turbine blade 21 measured by shock pulse measurement device 112 as a lightning strike parameter. With this configuration, occurrence of lightning strike can be detected from the shock pulse generated by the lightning strike, and based on a level of the shock pulse, a damage state of the wind turbine blade 21 caused by the lightning strike can be estimated.

Further, the state monitoring device 114 may use the shock value alone as a lightning strike parameter, instead of the lightning current, the distortion, the temperature and the vibration, or may use the shock pulse with at least one of the lightning current, the distortion, the temperature and the vibration, as the lightning strike parameter.

In one embodiment, one shock pulse sensor 110 may be provided at the rotor head 20 to detect vibration of the rotor head 20.

With 1 operation form, one shock pulse sensor 110 may be installed in the rotor head 20, and vibration of the rotor head 20 may be detected.

In one embodiment, a sound level in the periphery of the wind turbine generator 10 is used as the lightning strike parameter. FIG.15 is a schematic block diagram for explaining a structure of a lightning strike parameter acquisition part 116 for measuring a sound level in the periphery of the wind turbine generator 10.

The lightning strike parameter acquisition part 116 has a microphone 118, and the microphone 118 is, for instance, supported by a bracket secured to the tower 14, such as a steel belt (see FIG.6). A sound measurement device 120 as a signal processing device computes the sound level in the periphery of the wind turbine generator 10 based on the output signal of the microphone 118.

A state monitoring device 122 processes the sound level measured by the sound measurement device 120 as the lightning strike parameter. With this configuration, occurrence of lightning strike can be detected from the sound generated by the lightning strike, and based on the level of this sound, a damage state of the wind turbine blade 21 caused by the lightning strike can be estimated.

Further, the state monitoring device 122 may use the sound level alone as the lightning strike parameter, instead of the lightning current, the distortion, the temperature, the vibration and the shock pulse, or may use the sound level with at least one of the lightning current, the distortion, the temperature, the vibration and the shock pulse, as the lightning strike parameter.

In one embodiment, a plurality of microphones 118 may be installed.

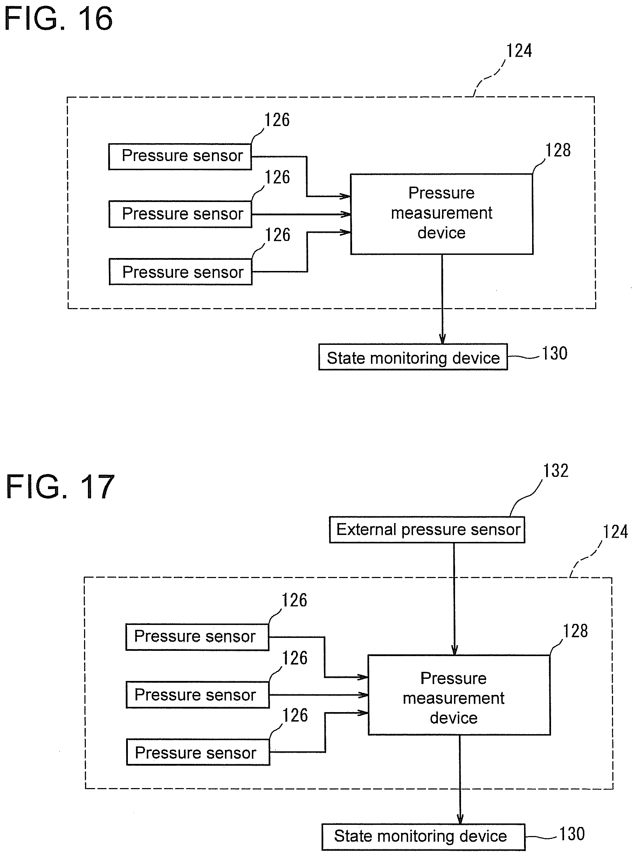

In one embodiment, an internal pressure of the wind turbine blade 21 is used as the lightning strike parameter. FIG.16 is a schematic block diagram for explaining a structure of a lightning strike parameter acquisition part 124 which measures the internal pressure of the wind turbine blade 21.

The lightning strike parameter acquisition part 124 has a pressure sensor 126, and the pressure sensor 126 is placed in a hollow part disposed within each wind turbine blade 21 with high air-tightness. A pressure measurement device 128 as a signal processing device computes the internal pressure of the wind turbine blade 21 based on the output signal of the pressure sensor.

A state monitoring device 130 processes the internal pressure of each wind turbine 21 measured by the pressure measurement device 128 as the lightning strike parameter. With this configuration, occurrence of lightning strike can be detected from rise of the pressure in the hollow part caused by the lightning strike, and based on the of the internal pressure, a damage state of the wind turbine blade 21 caused by the lightning strike can be estimated.

Further, the state monitoring device 130 may use the pressure alone as the lightning strike parameter, instead of the lightning current, the distortion, the temperature, the vibration, the shock pulse and the pressure, or may use the pressure with at least one of the lightning current, the distortion, the temperature, the vibration, the shock pulse and the pressure, as the lightning strike parameter.

In one embodiment, the state monitoring system may further comprise an external pressure sensor 132 for measuring an external pressure outside the wind turbine blade 21 as illustrated in FIG. 17. The external pressure sensor 132 is installed, for instance, in a place where the pressure is equal to the ambient pressure, such as the inside of the rotor head 20. In this case, the state monitoring device 130 monitors temporal change of a difference between the internal pressure and the external pressure of the wind turbine blade 21, and generation of pinholes in the wind turbine blade 21 can be detected by finding abnormality in the temporal change.

### [Reference Signs list]

- 10: Wind turbine generator
- 14: Tower
- 16: Nacelle
- 18: Rotor
- 20: Rotor head (Hub)
- 21: Wind turbine blade (Blade)
- 22: Blade body
- 23: Metal layer
- 24: Electric discharge ring
- 25: Shaft
- 26: Conductive member
- 28: Current path
- 30: Current sensor
- 32: Current measurement device
- 34: State monitoring device
- 38: External terminal
- 40: Lightning strike parameter acquisition part
- 44: First buffer
- 46: First trigger signal output part
- 48: Memory part
- 50: Reference value estimation part
- 52: Damage state estimation part
- 54: Database
- 56: Communication part
- 58: Operation propriety determination part

## Claims

1. A system for monitoring a state of a wind turbine generator (10) which comprises at least one blade (21), the system comprising:
a lightning strike parameter acquisition part (40) configured to acquire at least one lightning strike parameter which indicates a level of the lightning strike to the at least one blade (21);
a first buffer (44) configured to receive the lightning strike parameter from the lightning strike parameter acquisition part (40) and overwrite data regarding the lightning strike parameter within a first record period so as to accumulate the data temporarily;
a first trigger signal output part (46) configured to output a first trigger signal when the lightning strike parameter exceeds a threshold;
a memory part (48) configured to acquire at least a part of the data regarding the lightning strike parameter of a period from the first buffer (44) based on the first trigger signal, and store the at least part of the data, said period being at least a part of the first record period and including before and after an output time of the first trigger signal;
a reference value estimation part (50) configured to estimate a reference value of the lightning strike parameter based on a first data corresponding to a first period before the output time of the first trigger signal among the data stored in the memory part (48); and
a damage state estimation part (52) configured to estimate a damage state of the at least one blade (21) based on a second data corresponding to a second period among the data stored in the memory part (48) by considering the reference value, the second period being after the output time of the first trigger signal,
wherein the damage state estimation part (52) is configured to estimate the damage state based on a difference between the lightning strike parameter of the second data and the reference value.

2. The system for monitoring a state of the wind turbine generator (10) according to claim 1,
wherein the at least one lightning strike parameter includes a current flowing in the blade (21), and
wherein the damage state estimation part (52) is configured to obtain a lightning current generated at the blade (21) by the lightning strike from the difference and compute a time integrated value of the lightning current so as to estimate the damage state based on the time integrated value.

3. The system for monitoring a state of the wind turbine generator (10) according to claim 2, the system further comprising:
a database (54) configured to store correlation information which shows a correlation between the time integrated value of the current flowing in the blade (21) and the damage state of the blade (21),
wherein the damage state estimation part (52) is configured to apply the time integrated value of the lightning current obtained from the difference to the correlation information stored in the database (54) so as to estimate the damage state, and
wherein whether operation of the wind turbine generator (10) is possible is determined based on the estimated damage state.

4. The system for monitoring a state of the wind turbine generator (10) according to claim 1,
wherein the at least one blade (21) includes a plurality of blades (21) mounted to a hub (20) of the wind turbine generator (10),
wherein the at least one lightning strike parameter is acquired by the lightning strike parameter acquisition part (40) as to each of the plurality of blades (21),
wherein the first buffer (44) is configured to temporarily accumulate the data of the first record period as to each of the plurality of blades (21),
wherein the first trigger single output part (46) is configured to output the first trigger signal for a blade (21) among the plurality of blades (21), whose lightning strike parameter exceeds the threshold,
wherein the memory part (48) is configured to acquire from the first buffer (44) and store the data of the period regarding said blade (21) for which the first trigger signal is outputted,
wherein the reference value estimation part (50) is configured to estimate the reference value based on the first data regarding said blade (21) for which the first trigger signal is outputted, and
wherein the damage state estimation part (52) is configured to estimate the damage state of said blade (21) for which the first trigger signal is outputted based on the first data regarding said blade (21) for which the first trigger signal is outputted by considering the reference value.

5. The system for monitoring a state of the wind turbine generator (10) according to claim 4,
wherein each of the blades (21) includes a metal layer (23) extending in a longitudinal direction of the blade (21) from a blade tip part to a blade root part of the blade (21) so as to lead a lightning current generated by the lightning strike from the blade tip part to the blade root part,
wherein the metal layer (23) is electrically connected to an electric discharge ring (24) provided in the blade root part, and the discharge ring (24) being electrically connected to a nacelle (16) of the wind turbine generator (10) via an electric conduction part (26) fixed to the hub (20) so as to form a current path for the lightning current from the metal layer (23) to the nacelle (16), and
wherein the lightning strike parameter acquisition part (40) includes a current sensor (30) for detecting the current in a section of the current path between the electric discharge ring (24) and the nacelle (16) for each of the blades (21).

6. The system for monitoring a state of the wind turbine generator (10) according to claim 1,
wherein the at least one blade (21) includes a plurality of blades (21) mounted to a hub (20) of the wind turbine generator (10), and
wherein the system further comprises a communication part (56) which is configured to send monitoring information to an external terminal (38), the monitoring information includes at least one selected from a group of occurrence time of the lightning strike, identification information of a struck blade of the blades (21) which is struck by lightning, an azimuth angle of the struck blade at the occurrence time, the lightning strike parameter regarding the struck blade, the damage state of the struck blade, and information on whether or not operation of the wind turbine generator is possible.

7. The system for monitoring a state of the wind turbine generator (10) according to claim 1,
wherein the at least one lightning strike parameter includes at least one of a lightning current in the blade (21), an internal pressure of the blade (21), distortion of the blade (21), a temperature of the blade (21), vibration of the blade (21) or a rotor (18) including the blade (21), a shock pulse measurement signal of the blade (21) or the rotor (18), and an acoustic signal around the wind turbine generator (10).

8. The system for monitoring a state of the wind turbine generator (10) according to claim 1, the system further comprising:
a first pressure sensor (128) attached to the blade (21) so as to measure an internal pressure of the blade (21) as the lightning strike parameter;
a second pressure sensor (132) configured to measure an external pressure of the blade; and
a signal process part configured to calculate change of a pressure difference between the internal pressure and the external pressure of the blade 21.

9. The system for monitoring a state of the wind turbine generator (10) according to claim 1,
wherein the lightning strike parameter acquisition part (40) includes a distortion sensor attached to the blade (21), the distortion sensor being configured to measure distortion of the blade (21) as the lightning strike parameter.

10. The system for monitoring a state of the wind turbine generator according to claim 9,
wherein the lightning strike parameter acquisition part (40) includes:
an optical fiber (86) embedded in the blade (21);
a light source configured to emit light to the optical fiber (86);
an optical detection part configured to detect reflected light or transmitted light of the light emitted to the optical fiber (86); and
a distortion calculation part (88) configured to calculate the distortion based on the reflected light or transmitted light.

11. The system for monitoring a state of the wind turbine generator (10) according to claim 1,
wherein the at least one blade (21) includes a plurality of blades (21) mounted to a hub (20) of the wind turbine generator (10),
wherein the system further comprises:
an imaging device (62) configured to image the plurality of blades (21);
a second buffer (68) configured to receive imaging data of the plurality of blades (21) and overwrite the imaging data within a second record period so as to temporarily accumulate the imaging data in the second buffer (68); and
a communication part (56) configured to send monitoring information to an external terminal (38),
wherein the memory part (48) is configured to acquire at least a part of the imaging data of a period from the second buffer (68) based on the first trigger signal and store said at least part of the imaging data in the memory part (48), said period being at least a part of the second record period and including before and after an output time of the first trigger signal, and
wherein the communication part (56) is configured to send at least one selected from a group of the imaging data stored in the memory part (48), occurrence time of the lightning strike, an azimuth angle of each of the blades (21) at the occurrence time, the lightning strike parameter, the damage state of the blade (21) estimated based on the lightning strike parameter, and information on whether or not operation of the wind turbine generator (10) is possible as the monitoring information to the external terminal (38).

12. The system for monitoring a state of the wind turbine generator (10) according to claim 11,
wherein the wind turbine generator (10) comprises a tower (14), a hub (20) to which the blade (21) is mounted, and a nacelle (16) placed on the tower (14) to rotatably support the hub (20),
wherein each of the blades (21) includes a metal layer (23) extending in a longitudinal direction of the blade (21) from a blade tip part to a blade root part of the blade so as to lead a lightning current generated by the lightning strike from the blade tip part to the blade root part,
wherein the metal layer (23) is electrically connected to a current path extending from the hub to a root of the tower (14) via the nacelle (16), and
wherein the lightning strike parameter acquisition part (40) includes a current sensor (30) mounted to the tower (14), the current sensor (30) being configured to detect a current flowing in the current path.

13. The system for monitoring a state of the wind turbine generator (10) according to claim 1, further comprising:
an imaging device (62) configured to image the at least one blade (21); and
a coverage ratio calculation part configured to calculate a coverage ratio of coating on the blade (21) from the image of the at least one blade (21) obtained by the imaging device (62).

14. The system for monitoring a state of the wind turbine generator (10) according to claim 13, the system further comprising:
a second buffer (68) configured to receive the imaging data of the blade (21) and overwrite the imaging data within a second record period so as to temporarily accumulate the imaging data in the second buffer (68);
a second trigger signal output part (74) configured to output a second trigger signal when the coverage ratio calculated by the coverage ratio calculation part is below a threshold; and
a communication part (56) configured to send monitoring information to an external terminal (38),
wherein the memory part (48) is configured to acquire at least a part of the imaging data of a period from the second buffer (68) based on the second trigger signal and store said at least part of the imaging data in the memory part (48), said period being at least a part of the second record period and including before and after an output time of the second trigger signal, and
wherein the communication part (56) is configured to send at least one selected from a group of the imaging data stored in the memory part (48), occurrence time of the lightning strike, an azimuth angle of each of the blades (21) at the occurrence time, the lightning strike parameter, the damage state of the blade (21) estimated based on the lightning strike parameter, and information on whether or not operation of the wind turbine generator (10) is possible as the monitoring information to the external terminal (38).

15. The system for monitoring a state of the wind turbine generator (10) according to claim 11,
wherein the imaging device (62) is mounted to a tower (14) of the wind turbine generator (10) between a lower end of the tower and a position which is 15 meters above the lower end of the tower.

16. The system for monitoring a state of the wind turbine generator (10) according to claim 11,
wherein the imaging device (62) is placed within 5 meters from a tower (14) of the wind turbine generator (10).

17. The system for monitoring a state of the wind turbine generator (10) according to claim 11, the system further comprising:
at least one device provided for the imaging device (62) and selected from a group of a washer (78), a wiper (80) and a heater (82).

18. The system for monitoring a state of the wind turbine generator (10) according to claim 11, the system further comprising:
an infrared irradiation device (76) configured to irradiate an infrared ray to the blade (21),
wherein the imaging device (62) has sensitivity to the infrared ray.

19. A method for monitoring a state of a wind turbine generator (10) which comprises at least one blade (21), the method **characterized by** comprising the steps of:
acquiring at least one lightning strike parameter which indicates a level of the lightning strike to the at least one blade (21);
temporarily accumulating data regarding the lightning strike parameter of a first record period in a first buffer (44) by sending the lightning strike parameter to the first buffer (44) and repeating overwrite of the data;
outputting a first trigger signal when the lightning strike parameter exceeds a threshold;
acquiring at least a part of the data regarding the lightning strike parameter of a period from the first buffer (44) based on the first trigger signal and storing the at least part of the data in the memory part (48), said period being at least a part of the first record period and including before and after an output time of the first trigger signal;
estimating a reference value of the lightning strike parameter based on a first data corresponding to a first period before the output time of the first trigger signal among the data stored in the memory part (48); and
estimating a damage state of the at least one blade (21) based on a second data corresponding to a second period among the data stored in the memory part (48) by considering the reference value, the second period being after the output time of the first trigger signal, wherein the damage state is estimated based on a difference between the lightning strike parameter of the second data and the reference value.

## Patentansprüche

1. System zum Überwachen eines Zustands eines Windturbinengenerators (10), der mindestens einen Flügel (21) umfasst, wobei das System umfasst:
einen Blitzschlagparametererfassungsteil (40), der dafür konfiguriert ist, mindestens einen Blitzschlagparameter zu erfassen, der eine Stärke des Blitzeinschlags in den mindestens einen Flügel (21) angibt,
einen ersten Puffer (44), der dafür konfiguriert ist, den Blitzschlagparameter von dem Blitzschlagparametererfassungsteil (40) zu empfangen und Daten bezüglich des Blitzschlagparameters innerhalb eines ersten Aufzeichnungszeitraums zu überschreiben, um die Daten vorübergehend zu akkumulieren,
einen ersten Auslösesignalausgabeteil (46), der dafür konfiguriert ist, ein erstes Auslösesignal auszugeben, wenn der Blitzschlagparameter eine Schwelle übersteigt,
einen Speicherteil (48), der dafür konfiguriert ist, mindestens einen Teil der Daten bezüglich des Blitzschlagparameters eines Zeitraums aus dem ersten Puffer (44) auf der Basis des ersten Auslösesignals zu erfassen und den mindestens einen Teil der Daten zu speichern, wobei der Zeitraum mindestens ein Teil des ersten Aufzeichnungszeitraums ist und vor und nach einer Ausgabezeit des ersten Auslösesignals liegt,
einen Referenzwertschätzungsteil (50), der dafür konfiguriert ist, einen Referenzwert des Blitzschlagsparameters auf der Basis erster Daten, die einem ersten Zeitraum vor der Ausgabezeit des ersten Auslösesignals entsprechen, unter den in dem Speicherteil (48) gespeicherten Daten zu schätzen, und
einen Schadenszustandsschätzungsteil (52), der dafür konfiguriert ist, einen Schadenszustand des mindestens einen Flügels (21) auf der Basis zweiter Daten, die einem zweiten Zeitraum entsprechen, unter den in dem Speicherteil (48) gespeicherten Daten unter Berücksichtigung des Referenzwertes zu schätzen, wobei der zweite Zeitraum nach der Ausgabezeit des ersten Auslösesignals liegt,
wobei der Schadenszustandsschätzungsteil (52) dafür konfiguriert ist, den Schadenszustand auf der Basis einer Differenz zwischen dem Blitzschlagsparameter der zweiten Daten und dem Referenzwert zu schätzen.

2. System zum Überwachen eines Zustands des Windturbinengenerators (10) nach Anspruch 1,
wobei der mindestens eine Blitzschlagparameter einen Strom enthält, der in dem Flügel (21) fließt, und
wobei der Schadenszustandsschätzungsteil (52) dafür konfiguriert ist, aus der Differenz einen durch den Blitzschlag an dem Flügel (21) generierten Blitzstrom zu erhalten und einen zeitintegrierten Wert des Blitzstroms zu berechnen, um den Schadenszustand auf der Basis des zeitintegrierten Wertes zu schätzen.

3. System zum Überwachen eines Zustands des Windturbinengenerators (10) nach Anspruch 2, wobei das System ferner umfasst:
eine Datenbank (54), die dafür konfiguriert ist, Korrelationsinformationen zu speichern, die eine Korrelation zwischen dem zeitintegrierten Wert des in dem Flügel (21) fließenden Stroms und dem Schadenszustand des Flügels (21) zeigen,
wobei der Schadenszustandsschätzungsteil (52) dafür konfiguriert ist, den aus der Differenz erhaltenen zeitintegrierten Wert des Blitzstroms auf die in der Datenbank (54) gespeicherten Korrelationsinformationen anzuwenden, um den Schadenszustand zu schätzen, und
wobei auf der Basis des geschätzten Schadenszustands bestimmt wird, ob der Betrieb des Windturbinengenerators (10) möglich ist.

4. System zum Überwachen eines Zustands des Windturbinengenerators (10) nach Anspruch 1,
wobei der mindestens eine Flügel (21) mehrere Flügel (21) enthält, die an einer Nabe (20) des Windturbinengenerators (10) montiert sind,
wobei der mindestens eine Blitzschlagparameter durch den Blitzschlagparametererfassungsteil (40) in Bezug auf jeden der mehreren Flügel (21) erfasst wird,
wobei der erste Puffer (44) dafür konfiguriert ist, die Daten des ersten Aufzeichnungszeitraums in Bezug auf jeden der mehreren Flügel (21) vorübergehend zu akkumulieren,
wobei der erste Auslösesignalausgabeteil (46) dafür konfiguriert ist, das erste Auslösesignal für einen Flügel (21) unter den mehreren Flügeln (21) auszugeben, dessen Blitzschlagparameter die Schwelle übersteigt,
wobei der Speicherteil (48) dafür konfiguriert ist, die Daten des Zeitraums bezüglich des Flügels (21), für den das erste Auslösesignal ausgegeben wird, aus dem ersten Puffer (44) zu erfassen und zu speichern,
wobei der Referenzwertschätzungsteil (50) dafür konfiguriert ist, den Referenzwert auf der Basis der ersten Daten bezüglich des Flügels (21), für den das erste Auslösesignal ausgegeben wird, zu schätzen, und
wobei der Schadenszustandsschätzungsteil (52) dafür konfiguriert ist, den Schadenszustand des Flügels (21), für den das erste Auslösesignal ausgegeben wird, auf der Basis der ersten Daten bezüglich des Flügels (21), für den das erste Auslösesignal ausgegeben wird, unter Berücksichtigung des Referenzwertes zu schätzen.

5. System zum Überwachen eines Zustands des Windturbinengenerators (10) nach Anspruch 4,
wobei jeder der Flügel (21) eine Metallschicht (23) enthält, die sich in einer Längsrichtung des Flügels (21) von einem Flügelspitzenteil zu einem Flügelwurzelteil des Flügels (21) erstreckt, um einen durch den Blitzschlag generierten Blitzstrom von dem Flügelspitzenteil zu dem Flügelwurzelteil zu leiten,
wobei die Metallschicht (23) elektrisch mit einem Elektrizitätsentladungsring (24), der in dem Flügelwurzelteil angeordnet ist, verbunden ist, und der Entladungsring (24) über ein an der Nabe (20) befestigtes Elektrizitätsleitungsteil (26) elektrisch mit einer Gondel (16) des Windturbinengenerators (10) verbunden ist, um einen Strompfad für den Blitzstrom von der Metallschicht (23) zu der Gondel (16) zu bilden, und
wobei der Blitzschlagparametererfassungsteil (40) einen Stromsensor (30) zum Detektieren des Stroms in einem Abschnitt des Strompfades zwischen dem Elektrizitätsentladungsring (24) und der Gondel (16) für jeden der Flügel (21) enthält.

6. System zum Überwachen eines Zustands des Windturbinengenerators (10) nach Anspruch 1,
wobei der mindestens eine Flügel (21) mehrere Flügel (21) enthält, die an einer Nabe (20) des Windturbinengenerators (10) montiert sind, und
wobei das System ferner einen Kommunikationsteil (56) umfasst, der dafür konfiguriert ist, Überwachungsinformationen an ein externes Endgerät (38) zu senden, wobei die Überwachungsinformationen mindestens eines enthalten, das ausgewählt ist aus der Gruppe: die Zeit des Eintretens des Blitzschlags, Identifizierungsinformationen eines getroffenen Flügels der Flügel (21), der vom Blitz getroffen wurde, ein Azimutwinkel des getroffenen Flügels zur Zeit des Eintretens, der Blitzschlagparameter bezüglich des getroffenen Flügels, der Schadenszustand des getroffenen Flügels, und Informationen darüber, ob der Betrieb des Windturbinengenerators möglich ist oder nicht.

7. System zum Überwachen eines Zustands des Windturbinengenerators (10) nach Anspruch 1,
wobei der mindestens eine Blitzschlagparameter mindestens eines von einem Blitzstrom in dem Flügel (21), einem inneren Druck des Flügels (21), einem Verziehen des Flügels (21), einer Temperatur des Flügels (21), Vibrationen des Flügels (21) oder eines Rotors (18), der den Flügel (21) enthält, einem Stoßimpulsmessungssignal des Flügels (21) oder des Rotors (18), und einem akustischen Signal um den Windturbinengenerator (10) herum enthält.

8. System zum Überwachen eines Zustands des Windturbinengenerators (10) nach Anspruch 1, wobei das System ferner umfasst:
einen ersten Drucksensor (128), der an dem Flügel (21) angebracht ist, um einen inneren Druck des Flügels (21) als den Blitzschlagparameter zu messen,
einen zweiten Drucksensor (132), der dafür konfiguriert ist, einen externen Druck des Flügels zu messen, und
einen Signalverarbeitungsteil, der dafür konfiguriert ist, eine Änderung einer Druckdifferenz zwischen dem inneren Druck und dem äußeren Druck des Flügels (21) zu berechnen.

9. System zum Überwachen eines Zustands des Windturbinengenerators (10) nach Anspruch 1,
wobei der Blitzschlagparametererfassungsteil (40) einen Verziehungssensor enthält, der an dem Flügel (21) angebracht ist, wobei der Verziehungssensor dafür konfiguriert ist, ein Verziehen des Flügels (21) als den Blitzschlagparameter zu messen.

10. System zum Überwachen eines Zustands des Windturbinengenerators nach Anspruch 9,
wobei der Blitzschlagparametererfassungsteil (40) enthält:
eine optische Faser (86), die in den Flügel (21) eingebettet ist,
eine Lichtquelle, die dafür konfiguriert ist, Licht zu der optischen Faser (86) auszusenden,
einen optischen Detektionsteil, der dafür konfiguriert ist, reflektiertes Licht oder durchgelassenes Licht des zu der optischen Faser (86) ausgesendeten Lichts zu detektieren, und
einen Verziehungsberechnungsteil (88), der dafür konfiguriert ist, das Verziehen auf der Basis des reflektierten Lichts oder des durchgelassenen Lichts zu berechnen.

11. System zum Überwachen eines Zustands des Windturbinengenerators (10) nach Anspruch 1,
wobei der mindestens eine Flügel (21) mehrere Flügel (21) enthält, die an einer Nabe (20) des Windturbinengenerators (10) montiert sind,
wobei das System ferner umfasst:
eine Bildgabevorrichtung (62), die dafür konfiguriert ist, die mehreren Flügel (21) abzubilden,
einen zweiten Puffer (68), der dafür konfiguriert ist, Bildgabedaten der mehreren Flügeln (21) zu empfangen und die Bildgabedaten innerhalb eines zweiten Aufzeichnungszeitraums zu überschreiben, um die Bildgabedaten vorübergehend in dem zweiten Puffer (68) zu akkumulieren, und
einen Kommunikationsteil (56), der dafür konfiguriert ist, Überwachungsinformationen an ein externes Endgerät (38) zu senden,
wobei der Speicherteil (48) dafür konfiguriert ist, mindestens einen Teil der Bildgabedaten eines Zeitraums aus dem zweiten Puffer (68) auf der Basis des ersten Auslösesignals zu erfassen und den mindestens einen Teil der Bildgabedaten in dem Speicherteil (48) zu speichern, wobei der Zeitraum mindestens ein Teil des zweiten Aufzeichnungszeitraums ist und vor und nach einer Ausgabezeit des ersten Auslösesignals liegt, und
wobei der Kommunikationsteil (56) dafür konfiguriert ist, mindestens eines, das ausgewählt ist aus der Gruppe: die in dem Speicherteil (48) gespeicherten Bildgabedaten, die Zeit des Eintretens des Blitzschlags, ein Azimutwinkel eines jeden der Flügel (21) zur Zeit des Eintretens, der Blitzschlagparameter, der auf der Basis des Blitzschlagparameters geschätzte Schadenszustand des Flügels (21), und Informationen darüber, ob der Betrieb des Windturbinengenerators (10) möglich ist oder nicht, als die Überwachungsinformationen an das externe Endgerät (38) zu senden.

12. System zum Überwachen eines Zustands des Windturbinengenerators (10) nach Anspruch 11,
wobei der Windturbinengenerator (10) einen Mast (14), eine Nabe (20), an der der Flügel (21) montiert ist, und eine Gondel (16), die auf dem Mast (14) angeordnet ist, um die Nabe (20) drehbar zu stützen, umfasst,
wobei jeder der Flügel (21) eine Metallschicht (23) enthält, die sich in einer Längsrichtung des Flügels (21) von einem Flügelspitzenteil zu einem Flügelwurzelteil des Flügels erstreckt, um einen durch den Blitzschlag generierten Blitzstrom von dem Flügelspitzenteil zu dem Flügelwurzelteil zu leiten,
wobei die Metallschicht (23) elektrisch mit einem Strompfad verbunden ist, der sich von der Nabe über die Gondel (16) zu einer Wurzel des Masten (14) erstreckt, und
wobei der Blitzschlagparametererfassungsteil (40) einen Stromsensor enthält (30), der an dem Masten (14) montiert ist, wobei der Stromsensor (30) dafür konfiguriert ist, einen in dem Strompfad fließenden Strom zu detektieren.

13. System zum Überwachen eines Zustands des Windturbinengenerators (10) nach Anspruch 1, das ferner umfasst:
eine Bildgabevorrichtung (62), die dafür konfiguriert ist, den mindestens einen Flügel (21) abzubilden, und
einen Überzugsverhältnisberechnungsteil, der dafür konfiguriert ist, ein Überzugsverhältnis der Beschichtung auf dem Flügel (21) anhand des durch die Bildgabevorrichtung (62) erhalten Bildes des mindestens einen Flügels (21) zu berechnen.

14. System zum Überwachen eines Zustands des Windturbinengenerators (10) nach Anspruch 13, wobei das System ferner umfasst:
einen zweiten Puffer (68), der dafür konfiguriert ist, die Bildgabedaten des Flügels (21) zu empfangen und die Bildgabedaten innerhalb eines zweiten Aufzeichnungszeitraums zu überschreiben, um die Bildgabedaten in dem zweiten Puffer (68) vorübergehend zu akkumulieren,
einen zweiten Auslösesignalausgabeteil (74), der dafür konfiguriert ist, ein zweites Auslösesignal auszugeben, wenn das durch den Überzugsverhältnisberechnungsteil berechnete Überzugsverhältnis unter einer Schwelle liegt, und
einen Kommunikationsteil (56), der dafür konfiguriert ist, Überwachungsinformationen an ein externes Endgerät (38) zu senden,
wobei der Speicherteil (48) dafür konfiguriert ist, mindestens einen Teil der Bildgabedaten eines Zeitraums aus dem zweiten Puffer (68) auf der Basis des zweiten Auslösesignals zu erfassen und den mindestens einen Teil der Bildgabedaten in dem Speicherteil (48) zu speichern, wobei der Zeitraum mindestens ein Teil des zweiten Aufzeichnungszeitraums ist und vor und nach einer Ausgabezeit des zweiten Auslösesignals liegt, und
wobei der Kommunikationsteil (56) dafür konfiguriert ist, mindestens eines, das ausgewählt ist aus der Gruppe: die in dem Speicherteil (48) gespeicherten Bildgabedaten, die Zeit des Eintretens des Blitzschlags, ein Azimutwinkel eines jeden der Flügel (21) zur Zeit des Eintretens, der Blitzschlagparameter, der auf der Basis des Blitzschlagparameters geschätzte Schadenszustand des Flügels (21), und Informationen darüber, ob der Betrieb des Windturbinengenerators (10) möglich ist oder nicht, als die Überwachungsinformationen an das externe Endgerät (38) zu senden.

15. System zum Überwachen eines Zustands des Windturbinengenerators (10) nach Anspruch 11,
wobei die Bildgabevorrichtung (62) an einem Masten (14) des Windturbinengenerators (10) zwischen einem unteren Ende des Masten und einer Position, die 15 Meter oberhalb des unteren Endes des Masten liegt, montiert ist.

16. System zum Überwachen eines Zustands des Windturbinengenerators (10) nach Anspruch 11,
wobei die Bildgabevorrichtung (62) innerhalb von 5 Metern von einem Masten (14) des Windturbinengenerators (10) angeordnet ist.

17. System zum Überwachen eines Zustands des Windturbinengenerators (10) nach Anspruch 11, wobei das System ferner umfasst:
mindestens eine Vorrichtung, die für die Bildgabevorrichtung (62) bereitgestellt ist und aus der Gruppe einer Wascheinrichtung (78), einer Wischereinrichtung (80) und einer Heizeinrichtung (82) ausgewählt ist.

18. System zum Überwachen eines Zustands des Windturbinengenerators (10) nach Anspruch 11, wobei das System ferner umfasst:
eine Infrarotbestrahlungsvorrichtung (76), die dafür konfiguriert ist, einen Infrarotstrahl zu dem Flügel (21) auszusenden,
wobei die Bildgabevorrichtung (62) für den Infrarotstrahl empfindlich ist.

19. Verfahren zum Überwachen eines Zustands eines Windturbinengenerators (10), der mindestens einen Flügel (21) umfasst, wobei das Verfahren **dadurch gekennzeichnet ist, dass** es die Schritte umfasst:
Erfassen mindestens eines Blitzschlagparameters, der eine Stärke des Blitzeinschlags in den mindestens einen Flügel (21) angibt,
vorübergehendes Akkumulieren von Daten bezüglich des Blitzschlagparameters eines ersten Aufzeichnungszeitraums in einem ersten Puffer (44) durch Senden des Blitzschlagparameters zu dem ersten Puffer (44) und Wiederholen des Überschreibens der Daten,
Ausgeben eines ersten Auslösesignals, wenn der Blitzschlagparameter eine Schwelle übersteigt,
Erfassen mindestens eines Teils der Daten bezüglich des Blitzschlagparameters eines Zeitraums aus dem ersten Puffer (44) auf der Basis des ersten Auslösesignals und Speichern des mindestens einen Teils der Daten in dem Speicherteil (48), wobei der Zeitraum mindestens ein Teil des ersten Aufzeichnungszeitraums ist und vor und nach einer Ausgabezeit des ersten Auslösesignals liegt,
Schätzen eines Referenzwertes des Blitzschlagsparameters auf der Basis erster Daten, die einem ersten Zeitraum vor der Ausgabezeit des ersten Auslösesignals entsprechen, unter den in dem Speicherteil (48) gespeicherten Daten, und
Schätzen eines Schadenszustands des mindestens einen Flügels (21) auf der Basis zweiter Daten, die einem zweiten Zeitraum entsprechen, unter den in dem Speicherteil (48) gespeicherten Daten unter Berücksichtigung des Referenzwertes, wobei der zweite Zeitraum nach der Ausgabezeit des ersten Auslösesignals liegt, wobei der Schadenszustand auf der Basis einer Differenz zwischen dem Blitzschlagsparameter der zweiten Daten und dem Referenzwert geschätzt wird.

## Revendications

1. Système de surveillance d'un état d'une éolienne (10) qui comporte au moins une pale (21), le système comportant :
une partie d'acquisition de paramètre de coup de foudre (40) configurée pour acquérir au moins un paramètre de coup de foudre qui indique un niveau du coup de foudre sur la au moins une pale (21) ;
une première mémoire tampon (44) configurée pour recevoir le paramètre de coup de foudre provenant de la partie d'acquisition de paramètre de coup de foudre (40) et réécrire des données concernant le paramètre de coup de foudre au cours d'une première période d'enregistrement de façon à accumuler temporairement les données ;
une première partie de sortie de signal de déclenchement (46) configurée pour délivrer un premier signal de déclenchement quand le paramètre de coup de foudre dépasse un seuil ;
une partie de mémoire (48) configurée pour acquérir au moins une partie des données concernant le paramètre de coup de foudre d'une période provenant de la première mémoire tampon (44) sur la base du premier signal de déclenchement, et pour stocker la au moins une partie des données, ladite période étant au moins une partie de la première période d'enregistrement et comprenant avant et après un temps de sortie du premier signal de déclenchement ;
une partie d'estimation de valeur de référence (50) configurée pour estimer une valeur de référence du paramètre de coup de foudre sur la base de premières données correspondant à une première période avant le temps de sortie du premier signal de déclenchement parmi les données stockées dans la partie de mémoire (48) ; et
une partie d'estimation d'état d'endommagement (52) configurée pour estimer un état d'endommagement de la au moins une pale (21) sur la base de deuxièmes données correspondant à une deuxième période parmi les données stockées dans la partie de mémoire (48) en considérant la valeur de référence, la deuxième période étant après le temps de sortie du premier signal de déclenchement,
dans lequel la partie d'estimation d'état d'endommagement (52) est configurée pour estimer l'état d'endommagement sur la base d'une différence entre le paramètre de coup de foudre des deuxièmes données et la valeur de référence.

2. Système de surveillance d'un état de l'éolienne (10) selon la revendication 1,
dans lequel le au moins un paramètre de coup de foudre comprend un courant qui s'écoule dans la pale (21), et
dans lequel la partie d'estimation d'état d'endommagement (52) est configurée pour obtenir un courant de foudre généré au niveau de la pale (21) par le coup de foudre à partir de la différence et calculer une valeur intégrée dans le temps du courant de foudre de façon à estimer l'état d'endommagement sur la base de la valeur intégrée dans le temps.

3. Système de surveillance d'un état de l'éolienne (10) selon la revendication 2, le système comportant en outre :
une base de données (54) configurée pour stocker de l'information de corrélation qui montre une corrélation entre la valeur intégrée dans le temps du courant qui s'écoule dans la pale (21) et l'état d'endommagement de la pale (21),
dans lequel la partie d'estimation d'état d'endommagement (52) est configurée pour appliquer la valeur intégrée dans le temps du courant de foudre obtenu à partir de la différence à l'information de corrélation stockée dans la base de données (54) de façon à estimer l'état d'endommagement, et
dans lequel le fait qu'un fonctionnement de l'éolienne (10) est possible est déterminé sur la base de l'état d'endommagement estimé.

4. Système de surveillance d'un état de l'éolienne (10) selon la revendication 1,
dans lequel la au moins une pale (21) comprend une pluralité de pales (21) montées sur un moyeu (20) de l'éolienne (10),
dans lequel le au moins un paramètre de coup de foudre est acquis par la partie d'acquisition de paramètre de coup de foudre (40) pour chaque pale de la pluralité de pales (21),
dans lequel la première mémoire tampon (44) est configurée pour accumuler temporairement les données de la première période d'enregistrement pour chaque pale de la pluralité de pales (21),
dans lequel la première partie de sortie de signal de déclenchement (46) est configurée pour délivrer le premier signal de déclenchement pour une pale (21) parmi la pluralité de pales (21), dont le paramètre de coup de foudre dépasse le seuil,
dans lequel la partie de mémoire (48) est configurée pour acquérir à partir de la première mémoire tampon (44) et stocker les données de la période concernant ladite pale (21) pour laquelle le premier signal de déclenchement est délivré,
dans lequel la partie d'estimation de valeur de référence (50) est configurée pour estimer la valeur de référence sur la base des premières données concernant ladite pale (21) pour laquelle le premier signal de déclenchement est délivré, et
dans lequel la partie d'estimation d'état d'endommagement (52) est configurée pour estimer l'état d'endommagement de ladite pale (21) pour laquelle le premier signal de déclenchement est délivré sur la base des premières données concernant ladite pale (21) pour laquelle le premier signal de déclenchement est délivré en considérant la valeur de référence.

5. Système de surveillance d'un état de l'éolienne (10) selon la revendication 4,
dans lequel chacune des pales (21) comprend une couche métallique (23) s'étendant dans une direction longitudinale de la pale (21) depuis une partie de bout de pale jusqu'à une partie de pied de pale de la pale (21) de façon à conduire un courant de foudre généré par le coup de foudre depuis la partie de bout de pale jusqu'à la partie de pied de pale,
dans lequel la couche métallique (23) est électriquement reliée à un anneau de décharge électrique (24) prévu dans la partie de pied de pale, et l'anneau de décharge (24) étant électriquement relié à une nacelle (16) de l'éolienne (10) par l'intermédiaire d'une partie de conduction électrique (26) fixée sur le moyeu (20) de façon à former un passage de courant pour le courant de foudre depuis la couche métallique (23) jusqu'à la nacelle (16), et
dans lequel la partie d'acquisition de paramètre de coup de foudre (40) comprend un capteur de courant (30) destiné à détecter le courant dans une section du passage de courant entre l'anneau de décharge électrique (24) et la nacelle (16) pour chacune des pales (21).

6. Système de surveillance d'un état de l'éolienne (10) selon la revendication 1,
dans lequel la au moins une pale (21) comprend une pluralité de pales (21) montées sur un moyeu (20) de l'éolienne (10), et
dans lequel le système comporte en outre une partie de communication (56) qui est configurée pour envoyer de l'information de surveillance à un terminal externe (38), l'information de surveillance comprend au moins une choisie parmi un groupe d'un temps de production du coup de foudre, de l'information d'identification d'une pale frappée des pales (21) qui est frappée par la foudre, un angle d'azimut de la pale frappée au temps de production, le paramètre de coup de foudre concernant la pale frappée, l'état d'endommagement de la pale frappée, et de l'information sur le fait que le fonctionnement de l'éolienne est possible ou non.

7. Système de surveillance d'un état de l'éolienne (10) selon la revendication 1,
dans lequel le au moins un paramètre de coup de foudre comprend au moins un d'un courant de foudre dans la pale (21), d'une pression interne de la pale (21), d'une déformation de la pale (21), d'une température de la pale (21), d'une vibration de la pale (21) ou d'un rotor (18) comprenant la pale (21), d'un signal de mesure d'impulsion de choc de la pale (21) ou du rotor (18), et d'un signal acoustique autour de l'éolienne (10).

8. Système de surveillance d'un état de l'éolienne (10) selon la revendication 1, le système comportant en outre :
un premier capteur de pression (128) fixé sur la pale (21) de façon à mesurer une pression interne de la pale (21) comme paramètre de coup de foudre ;
un deuxième capteur de pression (132) configuré pour mesurer une pression externe de la pale ; et
une partie de traitement de signal configurée pour calculer un changement d'une différence de pression entre la pression interne et la pression externe de la pale 21.

9. Système de surveillance d'un état de l'éolienne (10) selon la revendication 1,
dans lequel la partie d'acquisition de paramètre de coup de foudre (40) comprend un capteur de déformation fixé sur la pale (21), le capteur de déformation étant configuré pour mesurer la déformation de la pale (21) comme paramètre de coup de foudre.

10. Système de surveillance d'un état de l'éolienne selon la revendication 9,
dans lequel la partie d'acquisition de paramètre de coup de foudre (40) comprend :
une fibre optique (86) incorporée dans la pale (21) ;
une source de lumière configurée pour émettre de la lumière vers la fibre optique (86) ;
une partie de détection optique configurée pour détecter de la lumière réfléchie ou de la lumière transmise de la lumière émise vers la fibre optique (86) ; et
une partie de calcul de déformation (88) configurée pour calculer la déformation sur la base de la lumière réfléchie ou de la lumière transmise.

11. Système de surveillance d'un état de l'éolienne (10) selon la revendication 1,
dans lequel la au moins une pale (21) comprend une pluralité de pales (21) montées sur un moyeu (20) de l'éolienne (10),
dans lequel le système comporte en outre :
un dispositif de formation d'image (62) configuré pour former une image de la pluralité de pales (21) ;
une deuxième mémoire tampon (68) configurée pour recevoir des données de formation d'image de la pluralité de pales (21) et réécrire les données de formation d'image au cours d'une deuxième période d'enregistrement de façon à accumuler temporairement les données de formation d'image dans la deuxième mémoire tampon (68) ; et
une partie de communication (56) configurée pour envoyer de l'information de surveillance à un terminal externe (38),
dans lequel la partie de mémoire (48) est configurée pour acquérir au moins une partie des données de formation d'image d'une période provenant de la deuxième mémoire tampon (68) sur la base du premier signal de déclenchement et stocker ladite au moins une partie des données de formation d'image dans la partie de mémoire (48), ladite période étant au moins une partie de la deuxième période d'enregistrement et comprenant avant et après un temps de sortie du premier signal de déclenchement, et
dans lequel la partie de communication (56) est configurée pour envoyer au moins un choisi parmi un groupe des données de formation d'image stockées dans la partie de mémoire (48), d'un temps de production du coup de foudre, d'un angle d'azimut de chacune des pales (21) au temps de production, du paramètre de coup de foudre, de l'état d'endommagement de la pale (21) estimé sur la base du paramètre de coup de foudre, et de l'information sur la fait que le fonctionnement de l'éolienne (10) est possible ou non comme information de surveillance au terminal externe (38).

12. Système de surveillance d'un état de l'éolienne (10) selon la revendication 11,
dans lequel l'éolienne (10) comporte une tour (14), un moyeu (20) sur lequel la pale (21) est montée, et une nacelle (16) placée sur la tour (14) pour supporter de façon rotative le moyeu (20),
dans lequel chacune des pales (21) comprend une couche métallique (23) s'étendant dans une direction longitudinale de la pale (21) depuis une partie de bout de pale jusqu'à une partie de pied de pale de la pale de façon à conduire un courant de foudre généré par le coup de foudre depuis la partie de bout de pale jusqu'à la partie de pied de pale,
dans lequel la couche métallique (23) est électriquement reliée à un passage de courant s'étendant depuis le moyeu jusqu'à une base de la tour (14) en passant par la nacelle (16), et
dans lequel la partie d'acquisition de paramètre de coup de foudre (40) comprend un capteur de courant (30) monté sur la tour (14), le capteur de courant (30) étant configuré pour détecter un courant qui s'écoule dans le passage de courant.

13. Système de surveillance d'un état de l'éolienne (10) selon la revendication 1, comportant en outre :
un dispositif de formation d'image (62) configuré pour former une image de la au moins une pale (21) ; et
une partie de calcul de rapport de couverture configurée pour calculer un rapport de couverture du revêtement sur la pale (21) à partir de l'image de la au moins une pale (21) obtenue par le dispositif de formation d'image (62).

14. Système de surveillance d'un état de l'éolienne (10) selon la revendication 13, le système comportant en outre :
une deuxième mémoire tampon (68) configurée pour recevoir les données de formation d'image de la pale (21) et réécrire les données de formation d'image au cours d'une deuxième période d'enregistrement de façon à accumuler temporairement les données de formation d'image dans la deuxième mémoire tampon (68) ;
une deuxième partie de sortie de signal de déclenchement (74) configurée pour délivrer un deuxième signal de déclenchement quand le rapport de couverture calculé par la partie de calcul de rapport de couverture est en-dessous d'un seuil ; et
une partie de communication (56) configurée pour envoyer de l'information de surveillance à un terminal externe (38),
dans lequel la partie de mémoire (48) est configurée pour acquérir au moins une partie des données de formation d'image d'une période de la deuxième mémoire tampon (68) sur la base du deuxième signal de déclenchement et stocker ladite au moins une partie des données de formation d'image dans la partie de mémoire (48), ladite période étant au moins une partie de la deuxième période d'enregistrement et comprenant avant et après un temps de sortie du deuxième signal de déclenchement, et
dans lequel la partie de communication (56) est configurée pour envoyer au moins l'un choisi parmi un groupe des données de formation d'image stockées dans la partie de mémoire (48), d'un temps de production du coup de foudre, d'un angle d'azimut de chacune des pales (21) au temps de production, du paramètre de coup de foudre, de l'état d'endommagement de la pale (21) estimé sur la base du paramètre de coup de foudre, et de l'information sur le fait qu'un fonctionnement de l'éolienne (10) est possible ou non comme information de surveillance au terminal externe (38).

15. Système de surveillance d'un état de l'éolienne (10) selon la revendication 11,
dans lequel le dispositif de formation d'image (62) est monté sur une tour (14) de l'éolienne (10) entre une extrémité inférieure de la tour et une position qui est 15 mètres au-dessus de l'extrémité inférieure de la tour.

16. Système de surveillance d'un état de l'éolienne (10) selon la revendication 11,
dans lequel le dispositif de formation d'image (62) est placé à 5 mètres ou moins d'une tour (14) de l'éolienne (10).

17. Système de surveillance d'un état de l'éolienne (10) selon la revendication 11, le système comportant en outre :
au moins un dispositif prévu pour le dispositif de formation d'image (62) et choisi parmi un groupe d'un dispositif de lavage (78), d'un dispositif d'essuyage (80) et d'un dispositif de chauffage (82).

18. Système de surveillance d'un état de l'éolienne (10) selon la revendication 11, le système comportant en outre :
un dispositif d'irradiation d'infrarouge (76) configuré pour irradier un rayon infrarouge sur la pale (21),
dans lequel le dispositif de formation d'image (62) a une sensibilité au rayon infrarouge.

19. Procédé de surveillance d'un état d'une éolienne (10) qui comporte au moins une pale (21), le procédé étant **caractérisé en ce qu'**il comporte les étapes consistant à :
acquérir au moins un paramètre de coup de foudre qui indique un niveau du coup de foudre sur la au moins une pale (21) ;
accumuler temporairement des données concernant le paramètre de coup de foudre au cours d'une première période d'enregistrement dans une première mémoire tampon (44) en envoyant le paramètre de coup de foudre dans la première mémoire tampon et en réécrivant les données de manière répétée ;
délivrer un premier signal de déclenchement quand le paramètre de coup de foudre dépasse un seuil ;
acquérir au moins une partie des données concernant le paramètre de coup de foudre d'une période provenant de la première mémoire tampon (44) sur la base du premier signal de déclenchement et stocker la au moins une partie des données dans la partie de mémoire (48), ladite période étant au moins une partie de la première période d'enregistrement et comprenant avant et après un temps de sortie du premier signal de déclenchement ;
estimer une valeur de référence du paramètre de coup de foudre sur la base de premières données correspondant à une première période avant le temps de sortie du premier signal de déclenchement parmi les données stockées dans la partie de mémoire (48) ; et
estimer un état d'endommagement de la au moins une pale (21) sur la base de deuxièmes données correspondant à une deuxième période parmi les données stockées dans la partie de mémoire (48) en considérant la valeur de référence, la deuxième période étant après le temps de sortie du premier signal de déclenchement, l'état d'endommagement étant estimé sur la base d'une différence entre le paramètre de coup de foudre des deuxièmes données et la valeur de référence.
